# EUROPÄISCHE PATENTSCHRIFT

(11) **EP 2 230 827 B1**
(45) Veröffentlichungstag und Bekanntmachung des Hinweises auf die Patenterteilung: **06.11.2019**
(21) Anmeldenummer: 09011314.3
(22) Anmeldetag: 03.09.2009
(51) Int. Cl.: H04M 17/00, H04M 15/00, H04M 1/247, G06Q 30/00, G06Q 20/32, G06Q 30/06

(54) **Betrieb eines in einem Kommunikationsdienste bereitstellenden Mobilfunknetz mit einem Konto nutzbaren Endgerätes**
Operation of a mobile radio network providing communication services with a terminal using an account
Fonctionnement d'un terminal pouvant être utilisé avec un compte dans un réseau radio mobile préparant des services de communication

(30) Priorität: 20.03.2009 DE 102009013696; 27.03.2009 DE 102009014674
(43) Veröffentlichungstag der Anmeldung: 22.09.2010
(60) Teilanmeldung: 12004886.3
(73) Patentinhaber: Vodafone Holding GmbH, 40213 Düsseldorf (DE)
(72) Erfinder: Rosenberger, Frank, 40668 Meerbusch (DE)
(74) Vertreter: Ring & Weisbrodt

(56) Entgegenhaltungen:
- EP-A1- 1 465 399
- EP-A2- 1 030 506
- DE-A1- 19 927 296
- US-A1- 2008 057 916

## Beschreibung

Die vorliegende Erfindung betrifft Verfahren zum Betreiben eines in einem Kommunikationsdienste bereitstellenden Mobilfunknetz, insbesondere einem Mobilfunknetz gemäß einem GSM-, GPRS-, UMTS- und/oder LTE-Funknetzstandard, mit wenigstens einem Guthabenkonto mit wenigstens einem Kontostand oder wenigstens einem Kundenkonto mit nachträglicher Rechnungslegung mit wenigstens einem Kontostand nutzbaren Endgerätes, welches eine Anzeigeeinrichtung zur optischen, akustischen und/oder sensuellen Wiedergabe von Informationen und wenigstens eine Eingabeeinrichtung zur optischen, akustischen und/oder sensuellen Erfassung von Informationen aufweist.

Gegenstand der vorliegenden Erfindung ist ferner ein Endgerät zum Betrieb in einem Kommunikationsdienste bereitstellenden Mobilfunknetz, insbesondere einem Mobilfunknetz gemäß einem GSM-, GPRS-, UMTS- und/oder LTE-Funknetzstandard, mit wenigstens einem Guthabenkonto mit wenigstens einem Kontostand oder wenigstens einem Kundenkonto mit nachträglicher Rechnungslegung mit wenigstens einem Kontostand, welches eine Anzeigeeinrichtung zur optischen, akustischen und/oder sensuellen Wiedergabe von Informationen und wenigstens eine Eingabeeinrichtung zur optischen, akustischen und/oder sensuellen Erfassung von Informationen aufweist, welches ausgebildet und/oder eingerichtet ist ein gemäßes Verfahren zumindest teilweise auszuführen.

Gegenstand der vorliegenden Erfindung ist darüber hinaus eine Einrichtung, vorzugsweise Recheneinrichtung, in einem Kommunikationsdienste bereitstellenden Mobilfunknetz, insbesondere einem Mobilfunknetz gemäß einem GSM-, GPRS-, UMTS- und/oder LTE-Funknetzstandard, zur Verwaltung und/oder Unterhaltung von wenigstens einem Guthabenkonto oder wenigstens einem Kundenkonto mit nachträglicher Rechnungslegung zur Abrechnung von mittels eines in dem Mobilfunknetz nutzbaren Endgerätes in Anspruch nehmbaren kostenpflichtigen Kommunikationsdiensten des Mobilfunknetzes, welches ausgebildet und/oder eingerichtet ist ein erfindungsgemäßes Verfahren zumindest teilweise auszuführen.

Im Stand der Technik sind entsprechende Verfahren, Einrichtungen und Endgeräte zum Betrieb in einem Kommunikationsdienste bereitstellenden Mobilfunknetz mit wenigstens einem Guthabenkonto mit wenigstens einem Kontostand und/oder wenigstens einem Kundenkonto mit nachträglicher Rechnungslegung mit wenigstens einem Kontostand in zahlreichen Ausführungsformen und Ausgestaltungen bekannt.

Die EP 1 030 506 A2 offenbart ein tragbares Prepaid-Telefon umfassend eine Anzeige, Eingabemittel zur Eingabe von Informationen und Anweisungen, eine Steuereinheit, die die Anzeige in Abhängigkeit von der Funktion der Eingabemittel steuert, und Sende-Empfängermittel, die über ein von einem Netzbetreiber gesteuertes drahtloses Netzwerk kommunizieren. Ein Netzbetreiber verwaltet ein Konto für dieses Telefon und aktualisiert das Konto bei Eintritt eines kreditrelevanten Ereignisses. Der Netzbetreiber leitet eine Kredit-Update-Nachricht an ein tragbares Prepaid-Telefon weiter, wobei die Nachricht Informationen über das laufende Konto und das kreditrelevante Ereignis enthält, wodurch die Nachricht beim Auftreten eines kreditrelevanten Ereignisses an das Telefon gesendet wird.

Die EP 1 465 399 A1 offenbart eine Telekommunikationsvorrichtung, die in der Lage ist, mobilen Endgeräten Informationen zur Verfügung zu stellen, um die Kreditinformationen für den Zugang zu einem Mobilfunknetz zu bestimmen. Die Telekommunikationsvorrichtung beinhaltet einen Guthaben-Server zum Speichern einer Menge an verfügbarem Gesprächsguthaben. Der Guthaben-Server ist betreibbar, um die Dauer eines Anrufs eines Benutzers von einem mobilen Endgerät aus zu bestimmen und nach Beendigung eines Anrufs betriebsfähig, um Daten an das mobile Endgerät zu übermitteln, wobei die Daten Informationen an das mobile Endgerät liefern, von dem aus dem Benutzer ein Betrag an verfügbarem Gesprächsguthaben angezeigt werden kann. Dabei stellt der Guthaben-Server einem Benutzer nach Beendigung eines Gesprächs automatisch Daten zur Verfügung, aus denen ein Betrag an Gesprächsguthaben ermittelt und dem Benutzer grafisch dargestellt werden kann.

Die US 2008/0057916 A1 offenbart, dass Teilnehmer eines drahtlosen Kommunikationsnetzes ihre Kontostände in einer interaktiven Echtzeit-Umgebung überprüfen können. Ein Teilnehmer fordert über eine mobile drahtlose Vorrichtung Saldoinformationen für das Konto des Teilnehmers an, wobei die Anforderung über eine Ein-Tasten-Schnittstelle auf der drahtlosen Vorrichtung des Teilnehmers erfolgen kann. Als Reaktion auf die Anforderung fragt ein Abrechnungssystem eine Teilnehmerdatenbank ab und erhält den Kontostand des Teilnehmers. Die Saldoinformationen werden dann als Informationsseite, wie z.B. eine WAP-Seite, an den Abonnenten zurückgegeben.

Die DE 199 27 296 A1 offenbart eine Anordnung zur Gebührenerhebung in einem Telefonnetz, wobei ein erster Teilnehmer mindestens einen Teil der Gebühren für von einem zweiten Teilnehmer zu ihm hergestellte Verbindungen trägt, wobei mit dem Telefonnetz ein intelligentes Netz verknüpft ist und bei einem Dienststeuerungsknoten oder Dienstknoten des intelligenten Netzes Steuermittel zur Gebührenzuweisung für vom zweiten Teilnehmer zum ersten Teilnehmer hergestellte Verbindungen an den ersten Teilnehmer aufweist.

Entsprechende Guthabenkonten sind im Stand der Technik insbesondere als so genannte Prepaid-Karten für in Mobilfunknetzen betreibbare Mobilfunktelefone bekannt. Entsprechende Prepaid-Kartensysteme sind in der Mobilfunkbranche üblich, wobei in der Regel zeit- und/oder dienstabhängige Verbindungen als in Anspruch genommene kostenpflichtige Kommunikationsdienste des Mobilfunknetzes von einem in der Regel seitens einer Einrichtung des Mobilfunknetzes verwalteten und/oder unterhaltenen Guthabenkonto abgerechnet werden.

Entsprechende Kundenkonten mit nachträglicher Rechnungslegung sind im Stand der Technik insbesondere als so genannte Postpaid-Karten für in Mobilfunknetzen betreibbare Mobilfunktelefone bekannt. Entsprechende Postpaid-Kartensysteme sind in der Mobilfunkbranche üblich, wobei in der Regel zeit- und/oder dienstabhängige Verbindungen als in Anspruch genommene kostenpflichtige Kommunikationsdienste des Mobilfunknetzes im Rahmen einer Rechnung nachträglich von einem Bankkonto des Kunden abgebucht werden. In der Regel hat der Kunde dabei mit dem Mobilfunknetzbetreiber oder einem Zwischenhändler einen zeitlich befristeten, jedoch verlängerbaren Nutzungsvertrag geschlossen.

Die nutzerseitige Handhabung derartiger Prepaid- und/oder Postpaid-Mobilfunktelefone ist bisher wenig komfortabel, insbesondere da Nutzer von entsprechenden Prepaid- Mobilfunktelefonen zur Abfrage des Kontostandes eines Guthabenkontos oder zum Aufladen des Guthabens auf einem Guthabenkonto aufwendige, langwierige und insbesondere für ungeübte Nutzer schwierige Eingaben machen müssen. Gleiches gilt entsprechend für Nutzer von so genannten Postpaid- Mobilfunktelefonen. Seitens des Mobilfunknetzes bedient man sich dabei in der Regel eines Sprachdialogsystems (so genanntes Voice Portal).

Der vorliegenden Erfindung liegt in Anbetracht dieses Standes der Technik die Aufgabe zugrunde, den Betrieb eines in einem Kommunikationsdienste bereitstellenden Mobilfunknetz mit einem Guthabenkonto oder einem Kundenkonto mit nachträglicher Rechnungslegung nutzbaren Endgerätes der vorgenannten Art zu verbessern, insbesondere hinsichtlich der nutzerseitigen Handhabbarkeit des Guthabenkontos bzw. des Kundenkontos mit nachträglicher Rechnungslegung.

Zur technischen Lösung wird mit der vorliegenden Erfindung ein Verfahren zum Betreiben eines in einem Kommunikationsdienste bereitstellenden Mobilfunknetz, insbesondere einem Mobilfunknetz gemäß einem GSM-, GPRS-, UMTS- und/oder LTE-Funknetzstandard, mit wenigstens einem Guthabenkonto (Prepaid) mit wenigstens einem Kontostand oder wenigstens einem Kundenkonto mit nachträglicher Rechnungslegung (Postpaid) mit wenigstens einem Kontostand nutzbaren Endgerätes, welches eine Anzeigeeinrichtung zur optischen, akustischen und/oder sensuellen Wiedergabe von Informationen und wenigstens eine Eingabeeinrichtung zur optischen, akustischen und/oder sensuellen Erfassung von Informationen aufweist, wobei während der Nutzung eines kostenpflichtigen Kommunikationsdienstes des Mobilfunknetzes mit dem Endgerät nach Ablauf vordefinierter und/oder vorgebbarer Zeitspannen der wenigstens eine Kontostand des wenigstens einen Guthabenkontos oder des wenigstens einen Kundenkontos mit nachträglicher Rechnungslegung mittels einer vom Endgerät an eine das Guthabenkonto verwaltenden und/oder unterhaltenden Einrichtung gerichteten Kontostandsabfrage der Kontostand des Guthabenkontos abgefragt wird, der abgefragte Kontostand als Kontostandinformation über das Mobilfunknetz an das Endgerät gesendet wird, und seitens der Anzeigeeinrichtung des Endgerätes wiedergegeben wird vorgeschlagen.

Der Erfindung liegt die Erkenntnis zugrunde, dass durch das erfindungsgemäße Signalisieren des Kontostandes des Guthabenkontos und/oder und/des Kundenkontos mit nachträglicher Rechnungslegung seitens der Anzeigeeinrichtung des Endgerätes eine verbesserte Handhabung hinsichtlich einer gebührenkontrollierten Nutzung von mit einem entsprechenden Guthabenkonto und/oder Kundenkonto mit nachträglicher Rechnungslegung in einem Mobilfunknetz nutzbaren Endgeräten erzielbar ist, insbesondere da jeweilige Kontostand eines Guthabenkontos und/oder Kundenkontos mit nachträglicher Rechnungslegung zumindest nach Beendigung wenigstens eines mit dem Endgerät in Anspruch genommenen kostenpflichtigen Kommunikationsdienstes des Mobilfunknetzes seitens der Anzeigeeinrichtung des Endgerätes wiedergegeben wird. Nutzer erhalten so eine wesentlich verbesserte Kostenkontrolle.

Eine vorteilhafte Ausgestaltung der Erfindung ist gekennzeichnet durch Sprach- und/oder Datendienste als in Anspruch genommene kostenpflichtige Kommunikationsdienste des Mobilfunknetzes, vorzugsweise durch Telefonate, SMS, MMS und/oder Datenverbindungen als in Anspruch genommene kostenpflichtige Kommunikationsdienste des Mobilfunknetzes.

Vorteilhafterweise weist die Eingabeeinrichtung des Endgerätes wenigstens ein Eingabemittel auf, welches vorzugsweise ausschließlich dazu eingerichtet ist, bei Betätigung den wenigstens einen Kontostand des wenigstens einen Guthabenkontos und/oder des wenigstens einen Kundenkontos mit nachträglicher Rechnungslegung seitens der Anzeigeeinrichtung des Endgerätes wiederzugeben.

Vorteilhafterweise ist das wenigstens eine Eingabemittel vorzugsweise ausschließlich dazu eingerichtet ist, bei weiterer Betätigung einen Wechsel bzw. eine Änderung des Gebührentarifs des Kunden und/oder die Einrichtung bzw. Buchung von Kommunikationsdiensten und/oder Tarifoptionen für den Kunden zumindest zu initiieren und/oder durchzuführen, vorzugsweise in einem Dialog unter Nutzung einer graphischen Menüführung seitens des Endgerätes.

In einer besonders vorteilhaften Ausgestaltung der Erfindung ermöglicht das wenigstens eine Eingabemittels der Eingabeeinrichtung des Endgerätes eine kontextsensitive Änderung von Kundendaten. Vorteilhafterweise ist die Kontextsensitivität in dem Vertragsverhältnis zwischen dem Kunden und dem Mobilfunknetzbetreiber bzw. Zwischenhändler bezüglich des Guthabenkontos und/oder des Kundenkontos mit nachträglicher Rechnungslegung begründet. Erfindungsgemäß werden dabei je nach Konto unterschiedliche Menüs bzw. Menüführungen seitens der Anzeigeeinrichtung des Endgerätes signalisiert.

Vorteilhafterweise werden vorgenommene Änderungen seitens der Anzeigeeinrichtung des Endgerätes wiedergegeben und vorzugsweise durch nochmalige Betätigung des wenigstens einen Eingabemittels der Eingabeeinrichtung des Endgerätes bestätigt.

Eine vorteilhafte Ausgestaltung der Erfindung ist dadurch gekennzeichnet, dass das wenigstens eine Eingabemittel - vorliegend auch "Blauer Knopf" genannt - der wenigstens einen Eingabeeinrichtung als betätigbare Taste, vorzugsweise als real betätigbare Taste, oder als auswählbarer Menüpunkt in einer Menüführung des Endgerätes zur Steuerung von Funktionalitäten und/oder seitens des Endgerätes ausführbarer Anwendungen ausgebildet ist. Hierdurch lässt sich die nutzerseitige Handhabung erfindungsgemäß weiter verbessern, insbesondere da der Eingabeaufwand der Nutzer im Zusammenhang mit einer Kontostandsabfrage des Guthabenkontos wesentlich vereinfacht wird.

Besonders bevorzugt ist weiter vorgesehen, dass der wenigstens eine Kontostand des wenigstens einen Guthabenkontos und/oder des wenigstens einen Kundenkontos mit nachträglicher Rechnungslegung seitens der Anzeigeeinrichtung des Endgerätes in graphisch ausgestalteter Form wiedergegeben wird.

Der Erfindung liegt die Erkenntnis zugrunde, dass durch das Vorsehen einer erfindungsgemäßen Wiedergabe eines Kontostandes des wenigstens einen Guthabenkontos oder des wenigstens einen Kundenkontos mit nachträglicher Rechnungslegung in graphisch ausgestalteter Form ein Nutzer eine Veränderung hinsichtlich des Kontostandes des wenigstens einen Guthabenkontos und/oder des wenigstens einen Kundenkontos mit nachträglicher Rechnungslegung verbessert wahrnimmt. Ferner kann der Nutzer bei erfindungsgemäßer Verfahrensführung besser beurteilen, wann seinem Guthabenkonto ein Geldbetrag zuzuführen ist. Vorteilhafterweise treten hierdurch deutlich seltener Situationen ein, in denen ein Nutzer aufgrund eines zu niedrigen Kontostandes seines Guthabenkontos kostenpflichtige Kommunikationsdienste des Mobilfunknetzes nicht nutzen kann.

Eine bevorzugte Ausführungsvariante des Verfahrens sieht vor, dass die graphisch ausgestaltete Wiedergabe des Kontostandes des wenigstens einen Guthabenkontos oder des wenigstens einen Kundenkontos mit nachträglicher Rechnungslegung als graphische Darstellung in Abhängigkeit von der Höhe des Kontostandes des wenigstens einen Guthabenkontos oder des wenigstens einen Kundenkontos mit nachträglicher Rechnungslegung erfolgt, wobei zumindest vordefinierten und/oder vorgebbaren Betragsintervallen jeweils wenigstens eine vordefinierte und/oder vorgebbare, für einen Nutzer des Endgerätes optisch unterscheidbare graphisch ausgestaltete Wiedergabeform zugewiesen ist, sodass durch Übergang des Kontostandes des wenigstens einen Guthabenkontos und/oder des wenigstens einen Kundenkontos mit nachträglicher Rechnungslegung von einem definierten Betragsintervall in ein anderes Betragsintervall die graphische Darstellung verändert wird. Ein Betragsintervall im Sinne der vorliegenden Erfindung ist dabei eine zusammenhängende Teilmenge von einen Kontostand beschreibenden Zahlenwerten, die durch eine untere und einen obere Intervallgrenze, die jeweils einem Zahlenwert entspricht, eindeutig bestimmt ist. Als Sonderfall kann ein Betragsintervall aber auch nur einen Zahlenwert umfassen, insbesondere nur den Wert "0". Als weiterer Sonderfall kann ein Intervall nur eine obere oder nur eine untere Intervallgrenze aufweisen und alle Werte, die kleiner beziehungsweise größer als dieser Wert sind, gehören zu diesem Betragsintervall. Ein Betragsintervall kann also beispielsweise Kontostände umfassen, die zwischen 0 EUR und einschließlich 5 EUR liegen, ein weiteres Betragsintervall kann Kontostände zwischen 5 EUR und 20 EUR umfassen und noch ein weiteres Betragsintervall kann Kontostände zwischen einschließlich 20 EUR und 100 EUR umfassen. Sowohl die Anzahl der Betragsintervalle als auch die Intervallgrenzen der Betragsintervalle können durch den Mobilfunknetzbetreiber vordefiniert sein, aber auch durch den Mobilfunknetzbetreiber oder den Nutzer nach individuellen Wünschen vorgegeben werden. Erfindungsgemäß ist zudem vorgesehen, dass auch die Art der graphisch ausgestalteten Wiedergabeform insbesondere durch den Nutzer vorgebbar ist. Gemäß einem weiteren Vorschlag der Erfindung erfolgt die graphisch ausgestaltete Wiedergabe bevorzugt nach Art einer Akkustandsanzeige oder nach Art einer Funksignalempfangsanzeige. Darüber hinaus sind erfindungsgemäß aber auch Diagramme oder zumindest diagrammartige Darstellungen, sowie Graphiken, Piktogramme, Symbole und dergleichen Darstellungen aber auch Animationen zumindest als auswählbare Wiedergabeform vorgesehen. Solange der Zahlenwert eines Kontostandes des wenigstens einen Guthabenkontos und/oder des wenigstens einen Kundenkontos mit nachträglicher Rechnungslegung innerhalb des gleichen Betragsintervalls liegt, wird zur Wiedergabe des Kontostandes die diesem Betragsintervall zugewiesene graphisch ausgestaltete Wiedergabeform seitens der Anzeigeeinrichtung dargestellt. Verändert sich der Kontostand des wenigstens einen Guthabenkontos und/oder des wenigstens einen Kundenkontos mit nachträglicher Rechnungslegung derart, dass der den Kontostand repräsentierende Zahlenwert innerhalb eines anderen Betragsintervall liegt, wird die diesem anderen Betragsintervall zugewiesene graphisch ausgestaltete Wiedergabeform seitens der Anzeigeeinrichtung dargestellt.

In einer weiteren vorteilhaften Ausgestaltung der Erfindung wird der wenigstens eine Kontostand des wenigstens einen Guthabenkontos oder der wenigstens eine Kontostand des wenigstens einen Kundenkontos mit nachträglicher Rechnungslegung permanent oder temporär seitens der Anzeigeeinrichtung des Endgerätes wiedergegeben. Eine permanente Wiedergabe des wenigstens einen Kontostandes des wenigstens einen Guthabenkontos oder des wenigstens einen Kontostandes des wenigstens einen Kundenkontos mit nachträglicher Rechnungslegung seitens der Anzeigeeinrichtung des Endgerätes erfolgt dabei vorteilhafterweise in einer so genannten Top-Up-Darstellung nach Art einer Akkustandsanzeige oder einer Funksignalsempfangsanzeige seitens der Anzeigeeinrichtung des Endgerätes, vorzugsweise in optischer Form, das heißt vorzugsweise in graphisch ausgestalteter Form. Eine Top-Up-Darstellung im Sinne der vorliegenden Erfindung ist insbesondere eine Zusatzdarstellung, die neben anderen Darstellungen, wie beispielsweise der Uhrzeit oder dergleichen Zustands- bzw. Statusinformationen, erfindungsgemäß im Vordergrund seitens der Anzeigeeinrichtung des Endgerätes dargestellt wird. Eine temporäre Wiedergabe erfolgt vorteilhafterweise für eine vorzugsweise einstellbare bzw. vorgebbare zeitliche Dauer. Eine weitere Ausgestaltung der Erfindung sieht vor, dass eine temporäre Wiedergabe so lange erfolgt, bis eine Eingabe seitens der Eingabeeinrichtung erfolgt, vorzugsweise durch nochmaliges Betätigung des wenigstens einen Eingabemittel der Eingabeeinrichtung des Endgerätes, welches vorzugsweise ausschließlich dazu eingerichtet ist, bei Betätigung den wenigstens einen Kontostand des wenigstens einen Guthabenkontos und/oder den wenigstens einen Kontostand des wenigstens einen Kundenkontos mit nachträglicher Rechnungslegung seitens der Anzeigeeinrichtung des Endgerätes wiederzugeben.

Eine besonders vorteilhafte Ausgestaltung der Erfindung ist dadurch gekennzeichnet, dass der wenigstens eine Kontostand des wenigstens einen Guthabenkontos und/oder der wenigstens eine Kontostand des wenigstens einen Kundenkontos mit nachträglicher Rechnungslegung automatisch mittels einer auf bzw. mit dem Endgerät ausgeführten Anwendung über das Mobilfunknetz von wenigstens einer das wenigstens eine Guthabenkonto oder das wenigstens eine Kundenkonto mit nachträglicher Rechnungslegung verwaltenden und/oder unterhaltenden Einrichtung abgefragt wird und der abgefragte Kontostand des wenigstens einen Guthabenkontos oder des wenigstens einen Kundenkontos mit nachträglicher Rechnungslegung seitens der Anzeigeeinrichtung des Endgerätes wiedergegeben wird.

Erfindungsgemäß wird so die nutzerseitige Handhabung weiter verbessert, insbesondere da die auf bzw. mit dem Endgerät ausgeführte Anwendung automatisch, das heißt zumindest nach Beendigung wenigstens eines mit dem Endgerät in Anspruch genommenen kostenpflichtigen Kommunikationsdienstes des Mobilfunknetzes oder bei Betätigung des vorzugsweise ausschließlich dazu eingerichteten Eingabemittels der Eingabeeinrichtung des Endgerätes, eine Kontostandsabfrage von dem Endgerät an die das Guthabenkonto verwaltende und/oder unterhaltende Einrichtung gesendet wird. Die Kontostandsabfrage umfasst dabei unter anderem das Endgerät und/oder den Nutzer des Endgerätes identifizierende Informationen, vorzugsweise die MSISDN (MSISDN: Mobile Subscriber ISDN; ISDN: Integrated Services Digital Network), die IMEI (IMEI: International Mobile Equipment Identity) und/oder die IMSI (IMSI: International Mobile Subscriber Identity), welche seitens der das Guthabenkonto verwaltenden und/oder unterhaltenden Einrichtung dem Guthabenkonto zugeordnet ist. Seitens der das Guthabenkonto verwaltenden und/oder unterhaltenden Einrichtung bei Empfang einer entsprechenden Kontostandsabfrage dann der Kontostand des Guthabenkontos abgefragt und der abgefragte Kontostand als Kontostandinformation über das Mobilfunknetz an das Endgerät gesendet. Aus der seitens des Endgerätes aufgrund der Kontostandsabfrage empfangenen Kontostandsinformation wird dann der Kontostand des Guthabenkontos ermittelt, vorzugsweise durch Extrahierung, und seitens der Anzeigeeinrichtung des Endgerätes wiedergegeben.

Vorteilhafterweise ist die Anwendung eine USSD-Menü-Anwendung (USSD: Unstructured Supplementary Service Data), eine SIM-STK-Anwendung, eine mCare-Anwendung, eine Java/OpenOS-Anwendung oder eine Browser-Anwendung.

Eine vorteilhafte Ausgestaltung der Erfindung sieht vor, dass die über das Mobilfunknetz erfolgende Kontostandsabfrage mittels USSD, mittels SMS oder mittels einer Datenverbindung erfolgt.

In einer weiteren vorteilhaften Ausgestaltung der Erfindung sendet das Endgerät im Rahmen einer Kontostandsabfrage einen USSD-String *100# an die das wenigstens eine Guthabenkonto und/oder das wenigstens eine Kundenkonto mit nachträglicher Rechnungslegung verwaltende und/oder unterhaltende Einrichtung.

Eine weitere vorteilhafte Ausgestaltungsform des erfindungsgemäßen Verfahrens sieht vor, dass der Auslöser für eine über das Mobilfunknetz erfolgende Kontostandsabfrage des wenigstens einen Kontostandes des wenigstens einen Guthabenkontos oder des wenigstens einen Kundenkontos mit nachträglicher Rechnungslegung und/oder der Auslöser für die Wiedergabe des wenigstens einen Kontostandes des wenigstens einen Guthabenkontos und/oder des wenigstens einen Kundenkontos mit nachträglicher Rechnungslegung seitens der Anzeigeeinrichtung des Endgerätes das Einschalten des Endgerätes ist. Vorteilhafterweise ist für den Nutzer somit direkt nach dem Einschalten eine verbesserte Einschätzung bzw. Bestimmung der Höhe des Kontostandes des wenigstens einen Guthabenkontos und/oder des wenigstens einen Kundenkontos mit nachträglicher Rechnungslegung möglich, wodurch der Nutzer noch besser beurteilen kann, wann seinem Guthabenkonto ein Geldbetrag zuzuführen ist.

Bei einer weiteren vorteilhaften Ausgestaltung der Erfindung ist der Auslöser für eine über das Mobilfunknetz erfolgende Kontostandsabfrage des wenigstens einen Kontostandes des wenigstens einen Guthabenkontos oder des wenigstens einen Kundenkontos mit nachträglicher Rechnungslegung und/oder der Auslöser für die Wiedergabe des wenigstens einen Kontostandes des wenigstens einen Guthabenkontos oder des wenigstens einen Kundenkontos mit nachträglicher Rechnungslegung seitens der Anzeigeeinrichtung des Endgerätes das Anmelden des Endgerätes in einem Mobilfunknetz. Hierdurch wird die Wahrnehmbarkeit des Kontostandes des wenigstens einen Guthabenkontos und/oder des wenigstens einen Kundenkontos mit nachträglicher Rechnungslegung und die Beurteilbarkeit, wann dem Guthabenkonto ein Geldbetrag zuzuführen ist, weiter verbessert, insbesondere wenn ein Nutzer zwischenzeitlich in einem Mobilfunknetz eines anderen Netzbetreibers eingebucht war, beispielsweise bei einem Auslandsaufenthalt, und anschließend sein Endgerät zur Einbuchung in das Mobilfunknetz seines Netzbetreibers wieder in dem Mobilfunknetz angemeldet wird.

Entsprechend einem Beispiel ist der Auslöser für eine über das Mobilfunknetz erfolgende Kontostandsabfrage des wenigstens einen Kontostandes des wenigstens einen Guthabenkontos und/oder des wenigstens einen Kundenkontos mit nachträglicher Rechnungslegung und/oder der Auslöser für die Wiedergabe des wenigstens einen Kontostandes des wenigstens einen Guthabenkontos oder des wenigstens einen Kundenkontos mit nachträglicher Rechnungslegung seitens der Anzeigeeinrichtung des Endgerätes der Ablauf einer vordefinierten und/oder vorgebbaren Zeitspanne. Hierdurch wird die Wahrnehmbarkeit des Kontostandes des wenigstens einen Guthabenkontos oder des wenigstens einen Kundenkontos mit nachträglicher Rechnungslegung und die Beurteilbarkeit, wann dem Guthabenkonto ein Geldbetrag zuzuführen ist, noch weiter verbessert. Einerseits kann der Nutzer eine zeitliche Dauer vorgeben, beispielsweise alle sechs Stunden, nach der der Kontostand des wenigstens einen Guthabenkontos oder des wenigstens einen Kundenkontos mit nachträglicher Rechnungslegung abgefragt und seitens der Anzeigeeinrichtung des Endgerätes wiedergegeben werden soll. Andererseits kann insbesondere durch den Mobilfunknetzbetreiber und damit durch das Mobilfunknetz eine Zeitspanne vordefiniert sein, die insbesondere nach Nutzung eines kostenpflichtigen Dienstes des Mobilfunknetzes abgelaufen sein muss, bis eine Kontostandsabfrage ausgelöst wird. Hierdurch wird mit hoher Sicherheit auch die Nutzung des letzten kostenpflichtigen Dienstes mit berücksichtigt.

Ein Beispiel sieht vor, dass der Auslöser für eine über das Mobilfunknetz erfolgende Kontostandsabfrage des wenigstens einen Kontostandes des wenigstens einen Guthabenkontos oder des wenigstens einen Kundenkontos mit nachträglicher Rechnungslegung und/oder der Auslöser für die Wiedergabe des wenigstens einen Kontostandes des wenigstens einen Guthabenkontos und/oder des wenigstens einen Kundenkontos mit nachträglicher Rechnungslegung seitens der Anzeigeeinrichtung des Endgerätes während der Nutzung eines Kommunikationsdienstes des Mobilfunknetzes der Ablauf einer vordefinierten und/oder vorgebbaren Zeitspanne ist. Vorteilhafterweise wird dem Nutzer seitens der Anzeigeeinrichtung des Endgerätes beispielsweise während eines längeren Telefonates oder der Nutzung von Internetdiensten nach einer vordefinierten beziehungsweise von dem Nutzer vorgebbaren Zeitspanne, beispielsweise alle 15 Minuten, der aktuelle Kontostand des wenigstens einen Guthabenkontos oder des wenigstens einen Kundenkontos mit nachträglicher Rechnungslegung wiedergegeben, vorzugsweise in graphisch ausgestalteter Form. Die Zeitspanne, nach der ein Kontostand abgefragt und/oder wiedergegeben wird, kann insbesondere auch in Abhängigkeit von der Höhe eines Kontostandes beziehungsweise in Abhängigkeit von dem Betragsintervall, in dem der Kontostand liegt, vordefiniert sein, insbesondere derart, dass bei niedrigem Kontostand eines Guthabenkontos der aktuelle Kontostand in kürzeren Abständen abgefragt und wiedergegeben wird.

Eine weitere bevorzugte Ausgestaltung der Erfindung sieht zudem vor, dass der Auslöser für die Wiedergabe des wenigstens einen Kontostandes des wenigstens einen Guthabenkontos und/oder des wenigstens einen Kundenkontos mit nachträglicher Rechnungslegung seitens der Anzeigeeinrichtung des Endgerätes das Schließen der Signalisierungsverbindung zur Abfrage des wenigstens einen Kontostandes des wenigstens einen Guthabenkontos oder des wenigstens einen Kundenkontos ist. Hierdurch wird der Nutzungskomfort vorteilhafterweise dadurch erhöht, dass dem Nutzer der abgefragte Kontostand direkt bei Verfügbarkeit wiedergegeben wird, ohne dass der Nutzer zusätzlich aktiv werden muss. Zudem wird die Wahrnehmbarkeit des Kontostandes des wenigstens einen Guthabenkontos oder des wenigstens einen Kundenkontos mit nachträglicher Rechnungslegung und die Beurteilbarkeit, wann dem Guthabenkonto ein Geldbetrag zuzuführen ist, noch weiter verbessert.

Eine besonders vorteilhafte Ausgestaltung der Erfindung sieht vor, dass mit und/oder nach der Wiedergabe des wenigstens einen Kontostandes des wenigstens einen Guthabenkontos seitens der Anzeigeeinrichtung des Endgerätes ein Aufladen des wenigstens einen Guthabenkontos oder des wenigstens einen Kundenkontos mit nachträglicher Rechnungslegung oder ein Transfer von Guthaben bzw. Beträgen von einem Guthabenkonto oder von einem Kundenkontos mit nachträglicher Rechnungslegung zu einem anderen Guthabenkonto oder einem anderen Kundenkonto mit nachträglicher Rechnungslegung oder von einem Guthabenkonto zu einem Kundenkonto mit nachträglicher Rechnungslegung ermöglicht wird, vorzugsweise in einem Dialog unter Nutzung einer graphischen Menüführung seitens des Endgerätes und/oder durch Betätigung wenigstens eines, vorzugsweise ausschließlich dazu eingerichteten Eingabemittels der Eingabeeinrichtung des Endgerätes. Erfindungsgemäß wird so eine weitere Verbesserung der nutzerseitigen Handhabung eines Guthabenkontos oder eines Kundenkontos mit nachträglicher Rechnungslegung erzielt, insbesondere da Nutzer die Möglichkeit erhalten, ihr Konto in einem vorzugsweise über das Mobilfunknetz erfolgenden Dialog mit der das jeweilige Konto verwaltenden und/oder unterhaltenden Einrichtung zu verwalten, das heißt insbesondere den Kontostand abzufragen, das Guthabenkonto aufzuladen oder einen Guthabentransfer vorzunehmen.

Vorteilhafterweise wird mit und/oder nach der Wiedergabe des wenigstens einen Kontostandes des wenigstens einen Kundenkontos mit nachträglicher Rechnungslegung seitens der Anzeigeeinrichtung des Endgerätes eine Wiedergabe des aktuellen Rechnungsstandes und/oder wenigstens eines der vorherigen Rechnungsstände bzw. der aktuellen Rechnung und/oder wenigstens einer der vorherigen Rechnungen ermöglicht, vorzugsweise in einem Dialog unter Nutzung einer graphischen Menüführung seitens des Endgerätes.

Eine weitere Ausgestaltung der Erfindung sieht vor, dass die wenigstens eine das wenigstens eine Guthabenkonto oder das wenigstens eine Kundenkonto mit nachträglicher Rechnungslegung verwaltende und/oder unterhaltende Einrichtung eine Einrichtung des Mobilfunknetzes ist, vorzugsweise eine Einrichtung eines Kundeninformations- und Abrechnungssystems (KIAS) des Mobilfunknetzes oder eine Einrichtung eines sogenannten Intelligenten Netzes (IN: Intelligentes Netz), einem diensteorientierten zentralen System, welches auf dem vorhandenen Mobilfunknetz aufsetzt und dieses um intelligente Netzkomponenten und zusätzliche Leistungsmerkmale erweitert bzw. solche ermöglicht.

Gegenstand der vorliegenden Erfindung ist ferner ein Endgerät zum Betrieb in einem Kommunikationsdienste bereitstellenden Mobilfunknetz, insbesondere einem Mobilfunknetz gemäß einem GSM-, GPRS-, UMTS- und/oder LTE-Funknetzstandard, mit wenigstens einem Guthabenkonto mit wenigstens einem Kontostand oder wenigstens einem Kundenkonto mit nachträglicher Rechnungslegung mit wenigstens einem Kontostand, welches wenigstens eine Anzeigeeinrichtung zur optischen, akustischen und/oder sensuellen Wiedergabe von Informationen und wenigstens eine Eingabeeinrichtung zur optischen, akustischen und/oder sensuellen Erfassung von Informationen aufweist, welches ausgebildet und/oder eingerichtet ist die das Endgerät betreffenden Schritte des erfindungsgemäßen Verfahrens auszuführen.

Gegenstand der vorliegenden Erfindung ist darüber hinaus eine Einrichtung, vorzugsweise Recheneinrichtung, in einem Kommunikationsdienste bereitstellenden Mobilfunknetz, insbesondere einem Mobilfunknetz gemäß einem GSM-, GPRS-, UMTS- und/oder LTE-Funknetzstandard, zur Verwaltung und/oder Unterhaltung von wenigstens einem Guthabenkonto und/oder wenigstens einem Kundenkonto mit nachträglicher Rechnungslegung zur Abrechnung von mittels eines in dem Mobilfunknetz nutzbaren Endgerätes in Anspruch nehmbaren kostenpflichtigen Kommunikationsdiensten des Mobilfunknetzes, welches ausgebildet und/oder eingerichtet die die Einrichtung betreffenden Schritte des erfindungsgemäßen Verfahrens auszuführen.

Weitere Einzelheiten, Merkmale und Vorteile der Erfindung werden nachfolgend anhand der in den Figuren der Zeichnung dargestellten Ausführungsbeispiele der Erfindung näher erläutert. Dabei zeigen:
- Fig. 1: in einem schematischen Blockdiagramm die erfindungsgemäßen Komponenten und Realisierungsoptionen für einen erfindungsgemäßen Betrieb eines in einem Kommunikationsdienste bereitstellenden Mobilfunknetz mit einem Guthabenkonto nutzbaren Endgerätes;
- Fig. 2: in einer schematischen Darstellung ein Ausführungsbeispiel für einen erfindungsgemäßen Betrieb eines in einem Kommunikationsdienste bereitstellenden Mobilfunknetz mit einem Guthabenkonto nutzbaren Endgerätes;
- Fig. 3: in einer schematischen Darstellung ein Ausführungsbeispiel für eine erfindungsgemäße Menüführung eines erfindungsgemäßen Betriebs eines in einem Kommunikationsdienste bereitstellenden Mobilfunknetz mit einem Guthabenkonto nutzbaren Endgerätes;
- Fig. 4: in einer schematischen Darstellung ein weiteres Ausführungsbeispiel für eine erfindungsgemäße Menüführung eines erfindungsgemäßen Betriebs eines in einem Kommunikationsdienste bereitstellenden Mobilfunknetz mit einem Guthabenkonto nutzbaren Endgerätes;
- Fig. 5a bis 5f: in einer schematischen Darstellung ein Ausführungsbeispiel für eine erfindungsgemäße graphisch ausgestaltete Wiedergabeform eines Kontostandes des wenigstens einen Guthabenkontos seitens der Anzeigeeinrichtung des Endgerätes;
- Fig. 6: in einer schematischen Darstellung ein Ausführungsbeispiel für einen Einstellvorgang hinsichtlich der Wiedergabe des Kontostandes des wenigstens einen Guthabenkontos über ein Menü des Endgerätes;
- Fig. 7: eine beispielhafte Auswahl von USSD-Strings zur erfindungsgemäßen Nutzung in einer USSD-Menü-Anwendung wie in Fig. 8.1 bis Fig. 8.7 dargestellt;
- Fig. 8.1 bis 8.7: ein Ausführungsbeispiel für eine erfindungsgemäße USSD-Menü-Anwendung und
- Fig. 9: ein Ausführungsbeispiel für eine Anzeige zur Einblendung auf der Anzeigeeinrichtung des Endgerätes während eine Anfrage an das Mobilfunknetz gerichtet wird.

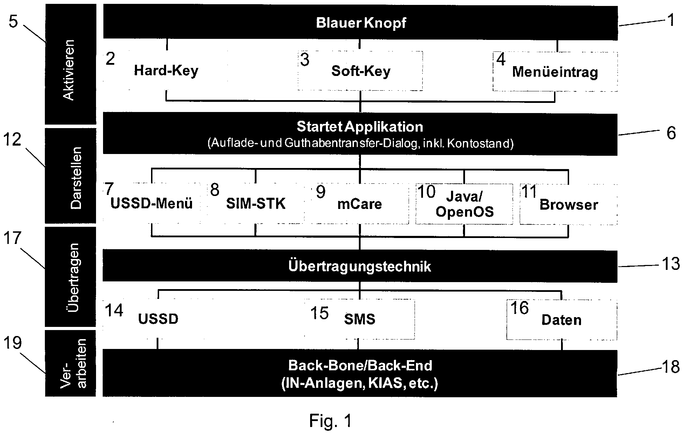

Fig. 1 zeigt in einem schematischen Blockdiagramm die an einem erfindungsgemäßen Betrieb eines in einem Kommunikationsdienste bereitstellenden Mobilfunknetz mit einem Guthabenkonto nutzbaren Endgerätes beteiligten Komponenten, umfassend:
- wenigstens ein Eingabemittel 1 ("Blauer Knopf") seitens des Endgerätes, wobei das Eingabemittel 1 vorzugsweise ausschließlich dazu eingerichtet ist, bei Betätigung bzw. Aktivierung (in Fig. 1 durch den mit dem Bezugszeichen 5 versehenen Funktionsblock dargestellt) den wenigstens einen Kontostand des wenigstens einen Guthabenkontos seitens der Anzeigeeinrichtung des Endgerätes wiederzugeben; das Eingabemittel 1 kann, wie in Fig. 1 dargestellt, dabei als sogenannter Hard-Key 2, das heißt insbesondere als real betätigbare Taste 2, als Soft-Key 3, das heißt insbesondere als bzw. mittels einer Softwarelösung ausgebildeten Taste 3 oder als auswählbarer Menüpunkt bzw. Menüeintrag 4 in einer Menüführung des Endgerätes zur Steuerung von Funktionalitäten und/oder seitens des Endgerätes ausführbarer Anwendungen ausgebildet sein;
- wenigstens eine Anwendung 6 ("Applikation") seitens des Endgerätes, wobei die Anwendung 6 automatisch eine Kontostandsabfrage initiiert, zumindest nach Beendigung wenigstens eines mit dem Endgerät in Anspruch genommenen kostenpflichtigen Kommunikationsdienstes des Mobilfunknetzes oder bei Betätigung des vorzugsweise ausschließlich dazu eingerichteten Eingabemittels 1 der Eingabeeinrichtung des Endgerätes, und die Wiedergabe bzw. Darstellung (in Fig. 1 durch den mit dem Bezugszeichen 12 versehenen Funktionsblock dargestellt) seitens der Anzeigeeinrichtung des Endgerätes umsetzt; bei Bedarf und/oder optional ermöglicht die Anwendung 6 ferner in einem Dialog unter Nutzung einer graphischen Menüführung seitens des Endgerätes ein Aufladen des wenigstens einen Guthabenkontos oder einen Transfer von Guthaben von einem Guthabenkonto zu einem anderen Guthabenkonto; die Anwendung 6 kann, wie in Fig. 1 dargestellt, dabei eine USSD-Menü-Anwendung 7, eine SIM-STK-Anwendung 8, eine mCare-Anwendung 9, eine Java/OpenOS-Anwendung 10 oder eine Browser-Anwendung 11 sein;
- wenigstens ein Mittel 13 zum Übertragen (in Fig. 1 durch den mit dem Bezugszeichen 17 versehenen Funktionsblock dargestellt) der Kontostandsabfrage und/oder Informationen bezüglich der Verwaltung des Guthabenkontos, insbesondere hinsichtlich eines Aufladens des wenigstens einen Guthabenkontos oder eines Transfers von Guthaben von einem Guthabenkonto zu einem anderen Guthabenkonto, von dem Endgerät an die das Guthabenkonto verwaltende und/oder unterhaltende Einrichtung 18 über das Mobilfunknetz bzw. von Kontostandsinformationen und/oder Informationen bezüglich der Verwaltung des Guthabenkontos, insbesondere hinsichtlich eines Aufladens des wenigstens einen Guthabenkontos oder eines Transfers von Guthaben von einem Guthabenkonto zu einem anderen Guthabenkonto, von der das Guthabenkonto verwaltenden und/oder unterhaltenden Einrichtung 18 an das Endgerät über das Mobilfunknetz; das wenigstens eine Mittel 13 seitens des Endgerätes bzw. seitens der Einrichtung 18 zur Verwaltung und/oder Unterhaltung des Gebührenkontos kann sich dabei vorliegend als Übertragungstechniken USSD 14, SMS 15 oder Datenverbindungen 16 bedienen;
- seitens der das Guthabenkonto verwaltenden und/oder unterhaltenden Einrichtung 18, welche vorliegend insbesondere als Recheneinrichtung eines Kundeninformations- und Abrechnungssystems (KIAS) im so genannten Backbone bzw. Back-End des Mobilfunknetzes oder eines so genannten Intelligenten Netzes (IN: Intelligentes Netz) ausgebildet sein kann erfolgt die erfindungsgemäße Verarbeitung (in Fig. 1 durch den mit dem Bezugszeichen 19 versehenen Funktionsblock dargestellt) der Kontostandsabfrage bzw. des Dialogs hinsichtlich eines Aufladens des wenigstens einen Guthabenkontos oder eines Transfers von Guthaben von einem Guthabenkonto zu einem anderen Guthabenkonto.

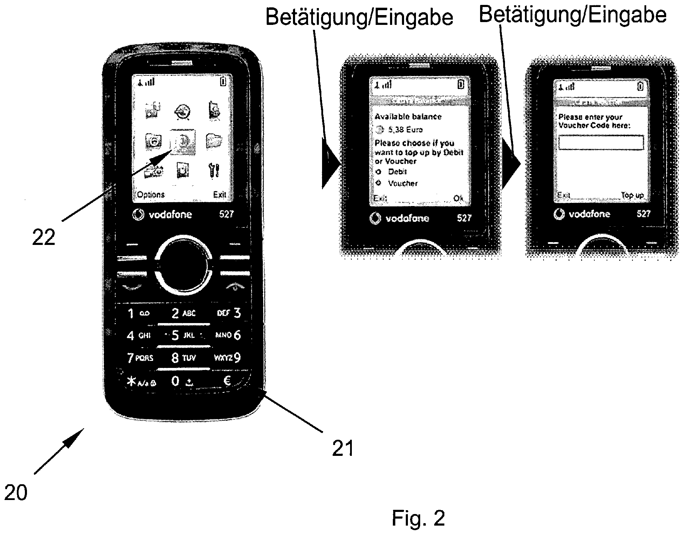

Fig. 2 zeigt ein in einem Kommunikationsdienste bereitstellenden Mobilfunknetz, insbesondere einem Mobilfunknetz gemäß einem GSM-, GPRS-, UMTS- und/oder LTE-Funknetzstandard, mit wenigstens einem Guthabenkonto mit wenigstens einem Kontostand betreibbares Endgerät 20, vorliegend in Form eine Mobilfunktelefons 20. Das Endgerät 20 weist wenigstens eine Anzeigeeinrichtung zur optischen (Display), akustischen (Lautsprecher) und/oder sensuellen (Vibrationseinrichtung) Wiedergabe von Informationen und wenigstens eine Eingabeeinrichtung zur optischen (Kamera), akustischen (Mikrofon) und/oder sensuellen (Sensorikelemente zur Erfassung von Bewegungen und/oder Lagen des Endgerätes 20) Erfassung von Informationen auf.

Die Eingabeeinrichtung des Endgerätes weist wenigstens ein Eingabemittel auf, welches vorzugsweise ausschließlich dazu eingerichtet ist, bei Betätigung den wenigstens einen Kontostand des wenigstens einen Guthabenkontos seitens der Anzeigeeinrichtung des Endgerätes wiederzugeben. Das wenigstens eine Eingabemittel der Eingabeeinrichtung ist dabei vorliegend sowohl als real betätigbare Taste 21 als auch als auswählbarer Menüpunkt 22 in einer Menüführung des Endgerätes zur Steuerung von Funktionalitäten und/oder seitens des Endgerätes ausführbarer Anwendungen ausgebildet.

Seitens des Endgerätes wird zur erfindungsgemäßen Realisierung vorteilhafterweise eine Anwendung ausgeführt, welche den Kontostand eines Guthabenkontos automatisch zumindest nach Beendigung wenigstens eines mit dem Endgerät in Anspruch genommenen kostenpflichtigen Kommunikationsdienstes des Mobilfunknetzes oder bei Betätigung des vorzugsweise ausschließlich dazu eingerichteten Eingabemittels 21 bzw. 22 über das Mobilfunknetz von wenigstens einer das Guthabenkonto verwaltenden und/oder unterhaltenden Einrichtung abfragt und den abgefragten Kontostand des Guthabenkontos seitens der Anzeigeeinrichtung des Endgerätes wiedergibt. Ein Ausführungsbeispiel für eine temporäre Wiedergabe des Kontostandes seitens der Anzeigeeinrichtung ist in der Detailansicht in Fig. 2 dargestellt.

Im Rahmen der Ausführung der Anwendung wird automatisch eine Kontostandsabfrage von dem Endgerät an die das Guthabenkonto verwaltende und/oder unterhaltende Einrichtung gesendet. Die Kontostandsabfrage umfasst dabei unter anderem das Endgerät und/oder den Nutzer des Endgerätes identifizierende Informationen, vorzugsweise die MSISDN (MSISDN: Mobile Subscriber ISDN; ISDN: Integrated Services Digital Network), die IMEI (IMEI: International Mobile Equipment Identity) und/oder die IMSI (IMSI: International Mobile Subscriber Identity), welche seitens der das Guthabenkonto verwaltenden und/oder unterhaltenden Einrichtung dem Guthabenkonto zugeordnet ist. Seitens der das Guthabenkonto verwaltenden und/oder unterhaltenden Einrichtung wird bei Empfang einer entsprechenden Kontostandsabfrage dann der Kontostand des Guthabenkontos abgefragt und der abgefragte Kontostand als Kontostandinformation über das Mobilfunknetz an das Endgerät gesendet. Aus der seitens des Endgerätes aufgrund der Kontostandsabfrage empfangenen Kontostandsinformation wird dann mittels der Anwendung automatisch der Kontostand des Guthabenkontos ermittelt, vorzugsweise durch Extrahierung, und seitens der Anzeigeeinrichtung des Endgerätes wiedergegeben.

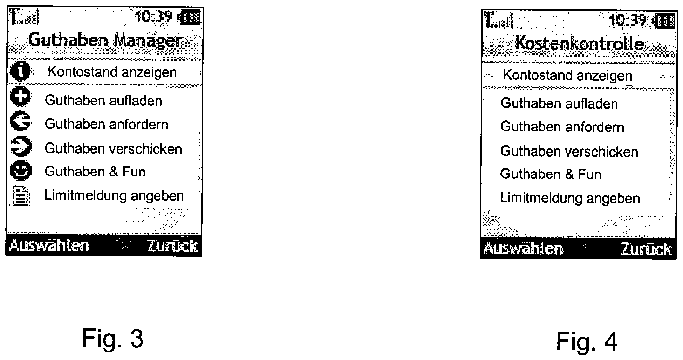

Fig. 3 und Fig. 4 zeigen jeweils ein Ausführungsbeispiel für eine erfindungsgemäße Menüführung eines erfindungsgemäßen Betriebs eines in einem Kommunikationsdienste bereitstellenden Mobilfunknetz mit einem Guthabenkonto nutzbaren Endgerätes, wie sie seitens der Anzeigeeinrichtung des Endgerätes 20 erfindungsgemäß signalisierbar bzw. wiedergebbar ist. Fig. 3 zeigt das Menü bzw. die Menüführung eines so genannten Guthaben Managers als im Betrieb des Endgerätes erfindungsgemäß ausgeführte Anwendung. Fig. 4 zeigt das Menü bzw. die Menüführung einer so genannten Kostenkontrolle als im Betrieb des Endgerätes erfindungsgemäß ausgeführte Anwendung.

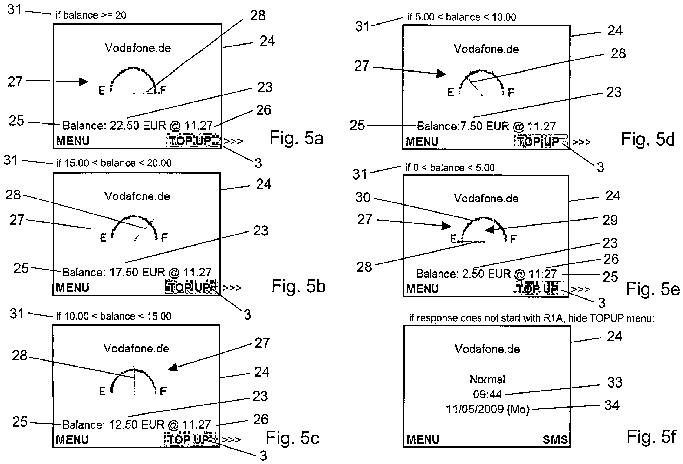

Fig. 5 zeigt in einer schematischen Darstellung ein Ausführungsbeispiel für eine erfindungsgemäße graphisch ausgestaltete Wiedergabeform 27 eines Kontostandes 23 des wenigstens einen Guthabenkontos seitens der Anzeigeeinrichtung 24 des Endgerätes. Diese graphisch ausgestaltete Wiedergabeform 27 wird in dem Ausführungsbeispiel als sogenannte Top-Up-Darstellung zusätzlich zu der Anzeige des Netzbetreibers und seitens des Endgerätes bereitgestellten, auswählbaren Funktionalitäten, hier "MENU" und "TOP UP", dargestellt, wobei vorliegend "TOP UP" als sogenannter "Softkey" 3 zum Ein- und Ausblenden der erfindungsgemäßen Wiedergabe des Kontostandes 23 genutzt werden kann. Fakultativ ist eine Statuszeile 25, wie in Fig. 5, dargestellt in dem Anzeigebereich des Endgerätes anzeigbar beziehungsweise einblendbar. Diese Statuszeile 25 kann unterschiedliche Informationen hinsichtlich des Kontostandes 23 wenigstens eines Guthabenkontos und/oder wenigstens eines Kundenkontos mit nachträglicher Rechnungslegung aufweisen. In dem vorliegenden Ausführungsbeispiel wird in der Statuszeile 25 der Kontostand 23 zu einem bestimmten Abfragezeitpunkt 26 angegeben. Mit jeder neuen Abfrage werden diese Statusinformationen aktualisiert. In dem Ausführungsbeispiel ist unter anderem eine Zeitspanne von einem Tag als Auslöser für eine Abfrage des Kontostandes 23 des Guthabenkontos vorgegeben, wodurch zumindest täglich der Kontostand 23 des Guthabenkontos über das Mobilfunknetz abgefragt wird. Der Zeitpunkt, wann der Kontostand 23 abgefragt wird, kann ebenfalls vorgebbar sein, und, wie im Ausführungsbeispiel dargestellt, täglich um 11.27 Uhr erfolgen. Alternativ und/oder ergänzend zu einer Abfrage der Kontostandes 23 des wenigstens einen Guthabenkontos und/oder des wenigstens einen Kundenkontos mit nachträglicher Rechnungslegung ist erfindungsgemäß ebenfalls vorgesehen, dass seitens des Mobilfunknetzbetreibers eine Kontostandsinformation an das Endgerät gesendet wird, wobei der Mobilfunknetzbetreiber das Senden der Kontostandsinformation initiieren kann. Das Senden der Kontostandsinformation erfolgt dabei vorzugsweise unter Berücksichtigung der Netzauslastung, also insbesondere dann, wenn die Netzwerkressourcen nur gering ausgelastet sind.

Als graphisch ausgestaltete Wiedergabeform 27 ist in dem Ausführungsbeispiel exemplarisch eine Darstellung ähnlich einem Analogmessinstrument vordefiniert. Eine Zeigerdarstellung 28 weist dabei innerhalb eines halbkreisförmigen Bereichs 29, der vorliegend symbolisch durch die Buschstaben "E" für "Empty" (=leer) und "F" für "Full" (=voll) begrenzt ist, auf Abschnitte des den Bereich abgrenzenden Kreisbogens 30, wobei den Abschnitten vorgebbare Betragsintervalle 31 für Geldbeträge, denen ein Kontostand 23 eines Guthabenkontos entsprechen kann, zugeordnet sind. In diesem Ausführungsbeispiel sind sechs Betragsintervalle 31 für Geldbeträge repräsentierende Zahlenwerte vorgegeben, nämlich ein Betragsintervall 31 für Geldbeträge größer/gleich 20 EUR (balance >= 20), ein Betragsintervall 31 für Geldbeträge zwischen 15 EUR und 20 EUR (15.00 < balance < 20.00), ein Betragsintervall 31 für Geldbeträge zwischen 10 EUR und 15 EUR (10.00 < balance <15.00), ein Betragsintervall 31 für Geldbeträge zwischen 5 EUR und 10 EUR (5.00 < balance < 10.00), ein Betragsintervall 31 für Geldbeträge zwischen 0 EUR und 5 EUR (0 < balance < 5.00) und ein Betragsintervall 31 für einen Geldbetrag von 0 EUR. Jedem der Betragsintervalle 31 ist eine graphische Darstellung 27 zugewiesen. Beträgt der Kontostand beispielsweise 22,50 EUR und befindet sich somit in dem Betragsintervall 31 für Geldbeträge größer/gleich 20 EUR, so erfolgt bei Wiedergabe des Kontostandes 23 in graphisch ausgestalteter Form 27 eine Darstellung wie in Fig. 5a. Die Zeigerdarstellung 28 weist auf "F", wodurch der Nutzer vorteilhafterweise sofort beurteilen kann, dass ein sogenanntes Aufladen des Guthabenkontos, wodurch dem Guthabenkonto ein Geldbetrag zugeführt wird, nicht erforderlich ist. Sinkt der Kontostand 23 des Guthabenkontos auf einen Betrag unter 20 EUR, und liegt somit in dem Betragsintervall 31 für Geldbeträge zwischen 15 EUR und 20 EUR, so wird die diesem Betragsintervall 31 zugewiesene, für den Nutzer optisch unterscheidbare graphische Darstellung 27 bei einer graphisch ausgestalteten Wiedergabe des Kontostandes 23 angezeigt. In Fig. 5b ist dies beispielhaft für einen Kontostand 23 von 17,50 EUR dargestellt. Entsprechend sind in den Figuren Fig. 5c, Fig. 5d und Fig. 5e Beispiele der graphisch ausgestalteten Wiedergabe 27 für Kontostände 23 von 12,50 EUR, von 7,50 EUR beziehungsweise 2,50 EUR dargestellt. Beträgt der Kontostand 23 0 EUR und befindet sich somit in dem Betragsintervall 31 für einen Geldbetrag von 0 EUR, so ist in dem Ausführungsbeispiel vorgesehen, dass die in Fig. 5e dargestellte Darstellung 27 zusätzlich blinkt (in Fig. 5 nicht dargestellt). In diesem Fall wäre die graphisch ausgestaltete Wiedergabeform 27 eine Animation.

Über ein entsprechendes Menü des Endgerätes kann der Nutzer den Betragsintervallen 31 aber auch andere graphische Darstellungen 27 zuweisen.

Zudem sind über das Menü sowohl die Anzahl der Betragsintervalle 31 als auch die obere und/oder untere Intervallgrenze vorgebbar.

In dem Ausführungsbeispiel sind als Auslöser für die Abfrage des Kontostandes 23 neben dem Ablauf einer vorgegebenen Zeitspanne (täglich) insbesondere das Einschalten beziehungsweise das sogenannte Hochfahren des Endgerätes, das Beenden einer Telefonverbindung, das Beenden der Nutzung eines Kommunikationsdienstes, also beispielsweise das Senden einer SMS, das Schließen einer PDP Verbindung sowie das Verstreichen einer vordefinierten Zeitspanne während einer bestehenden PDP Verbindung vorgesehen.

Wenn auf eine Kontostandsabfrage keine entsprechende Rückmeldung erfolgt, ist in dem Ausführungsbeispiel vorgesehen, dass je nach Voreinstellung durch den Nutzer, entweder weiterhin der zuletzt angegebene Kontostand 23 wiedergegeben wird und ein zusätzlicher Hinweis an den Nutzer erfolgt, dass der aktuelle Kontostand 23 nicht abgefragt werden konnte (nicht in der Figur dargestellt), oder es erfolgt, wie in Fig. 5f dargestellt, keine Wiedergabe des Kontostandes, sondern stattdessen eine Wiedergabe der Urzeit 33 und des Datums 34, sowie gegebenenfalls eine Wiedergabe einer Statusinformation, wie in Fig. 5f "Normal".

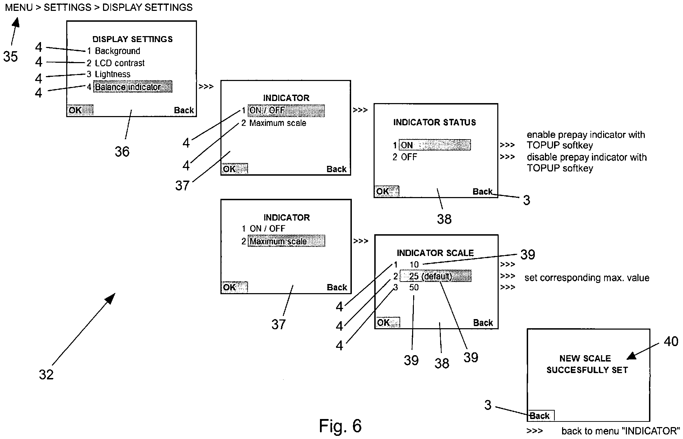

In Fig. 6 ist ein Ausführungsbeispiel für einen Einstellvorgang hinsichtlich der Wiedergabe des Kontostandes 23 des wenigstens einen Guthabenkontos über ein Menü 32 des Endgerätes dargestellt. In einem Menü 32 sind über die Menüauswahl 35 "MENU" > "SETTINGS" > "DISPLAY SETTINGS" Einstellungen hinsichtlich der Anzeigeeinrichtung 24 des Endgerätes, wie in Fig. 6a dargestellt, tätigbar. Durch Auswahl des Menüpunktes 4 "4 Balance Indicator" im Untermenü 36 "DISPLAY SETTINGS" gelangt man zu einem weiteren Untermenü 37 "INDICATOR"; welches in Fig. 6b und Fig. 6d dargestellt ist. Durch Auswahl des Menüpunktes 4 "1 ON / OFF" wird das weitere Untermenü 38 "INDICATOR STATUS" aufgerufen. Hier ist durch Auswahl des Menüpunktes 4 "1 ON" beziehungsweise des Menüpunktes 4 "2 OFF" die Wiedergabe des Kontostandes 23 des wenigstens einen Guthabenkontos seitens der Anzeigeeinrichtung des Endgerätes ein- beziehungsweise ausschaltbar. Ein derartiges Einbeziehungsweise Ausschalten der Wiedergabe des Kontostandes 23 des wenigstens einen Guthabenkontos seitens der Anzeigeeinrichtung 24 des Endgerätes ist ferner über den in Fig. 5 dargestellten und mit "TOP UP" bezeichneten sogenannten "Softkey" 3 möglich.

Durch Auswahl des Menüpunktes 4 "2 Maximum scale", im Untermenü 37 "INDICATOR" wird das weitere Untermenü 38 "INDICATOR SCALE" aufgerufen, in dem hinsichtlich einer graphisch ausgestalteten Wiedergabe 27 des Kontostandes 23 des wenigstens einen Guthabenkontos ein Maximalwert 39 vorgebbar ist. Liegt ein Kontostand 23 über diesem Wert, so ist erfindungsgemäß vorgesehen, dass bei einer graphisch ausgestalteten Wiedergabe 27 des Kontostandes 23, wie beispielsweise in Fig. 5 dargestellt, ein "volles" Guthabenkonto signalisiert wird, bezogen auf das Ausführungsbeispiel in Fig. 5 also die Zeigerdarstellung 28 auf "F" weist, wie in Fig. 5a dargestellt. Als Maximalwert 39 ist in dem vorliegenden Ausführungsbeispiel "25" voreingestellt, was vorliegend einem Guthabenbetrag von 25,00 EUR entspricht. Alternativ hierzu sind in dem Ausführungsbeispiel durch Wahl der Menüpunkte 4 "1 10", beziehungsweise "3 50", aber auch Maximalwerte 39 von "10" beziehungsweise "50" entsprechend 10,00 EUR beziehungsweise 50,00 EUR in dem Untermenü 38 "INDICATOR SCALE" vorgebbar. Nach einer entsprechenden Auswahl wird dem Nutzer durch eine Texteinblendung 40 mitgeteilt, dass der neue Maximalwert 39 erfolgreich gesetzt wurde. Durch eine entsprechende Eingabe, hier durch Auswahl des Softkeys 3 "Back" kann vorliegend stets wieder in das vorhergehende Menü gelangt werden.

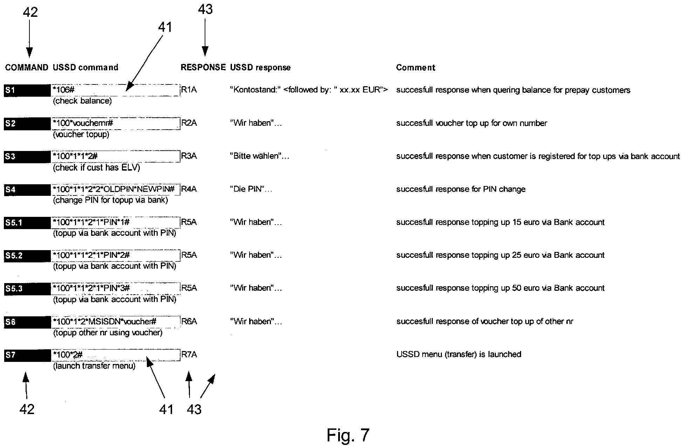

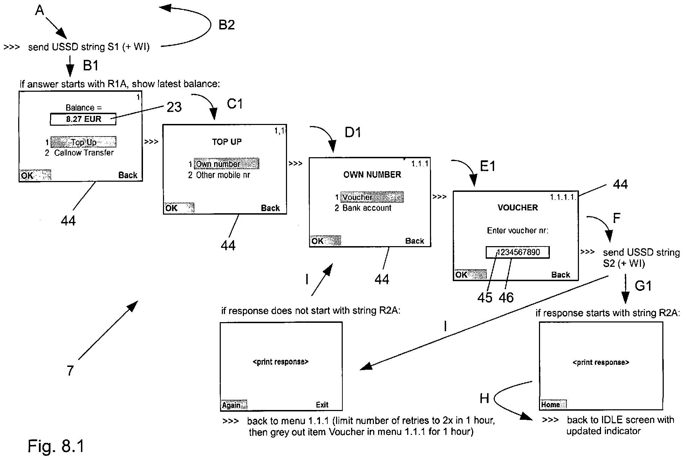

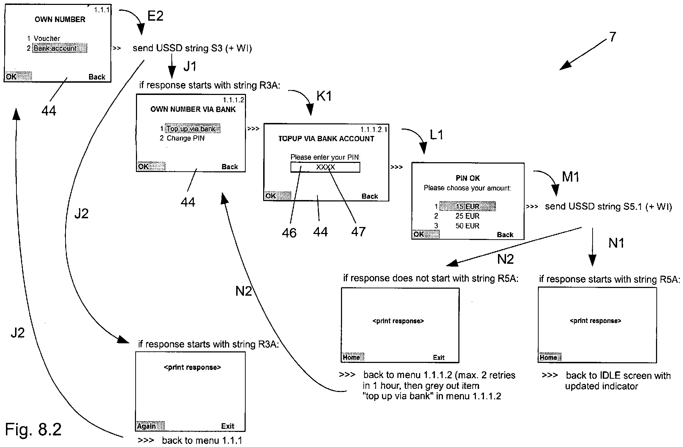

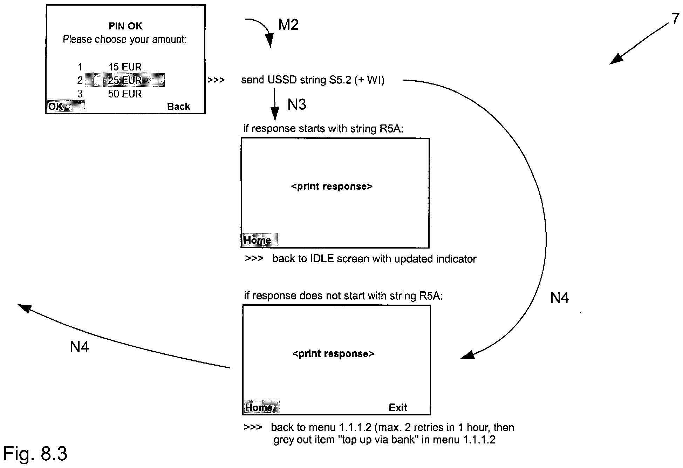

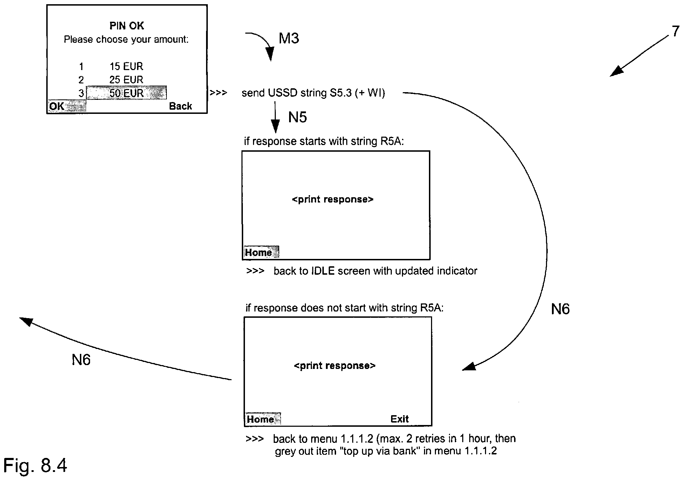

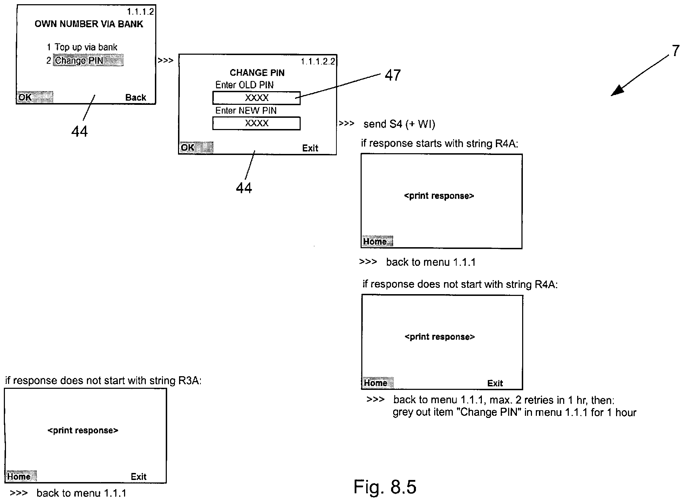

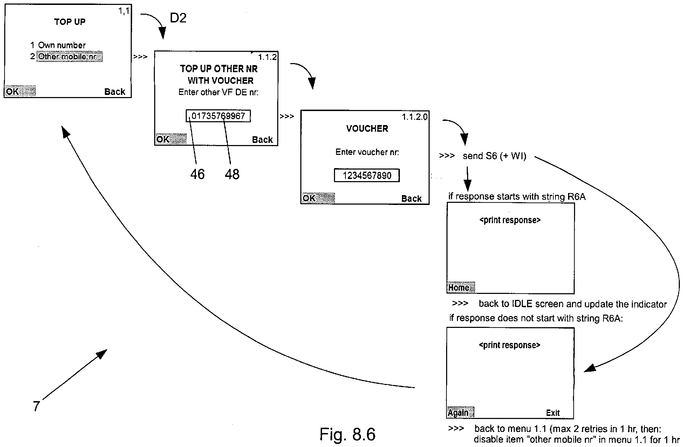

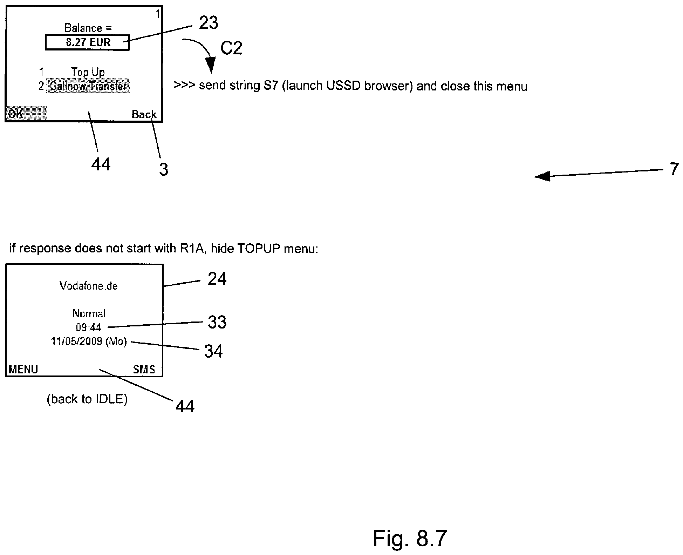

Fig. 7 zeigt eine beispielhafte Auswahl von USSD-Strings 41 zur erfindungsgemäßen Nutzung in einer USSD-Menü-Anwendung 7 wie in Fig. 8.1 bis Fig. 8.7 dargestellt. Hierbei sind unterschiedlichen Befehlen 42 (COMMAND) S1 bis S7 jeweils ein USSD-String 41 (USSD-command) zugeordnet, der zur Ausführung des Befehls an das Mobilfunknetz gesendet wird. Als Antwort auf das Senden eines Befehls 42 S1 bis S7 wird eine Antwort (RESPONSE) 43 R1A bis R7A des Mobilfunknetzes erwartet, die dem Nutzer eine entsprechende Rückmeldung, im Allgemeinen in Form einer Textmeldung, ohne jedoch darauf beschränkt zu sein, auf den gesendeten Befehl 42 liefert. Der Befehl S1 dient beispielsweise dem Prüfen des Kontostandes 23 (check balance) des wenigstens einen Guthabenkontos und/oder des wenigstens einen Kundenkontos mit nachträglicher Rechnungslegung. Im Rahmen der Beschreibung der Fig. 8 wird auf die Befehle 42 beziehungsweise die USSD-Strings 41 aus Fig. 7 zurückgegriffen und näher auf diese eingegangen.

In den Figuren Fig. 8.1 bis Fig. 8.7 ist ein Ausführungsbeispiel für eine erfindungsgemäße USSD-Menü-Anwendung 7 dargestellt, wobei in Fig. 8.1 bis Fig. 8.7 unterschiedliche Verzweigungen innerhalb der Menüstruktur der USSD-Menü-Anwendung 7 dargestellt sind. Mittels der auf einem Endgerät ausgeführten USSD-Menü-Anwendung 7 ist wenigstens ein Kontostand 23 eines Guthabenkontos eines Nutzers über das Mobilfunknetz abfragbar und der abgefragte Kontostand 23 des Guthabenkontos seitens der Anzeigeeinrichtung 24 des Endgerätes wiedergebbar.

Beginnend in Fig. 8.1 wird zunächst initiiert durch einen der oben beschriebenen Auslöser, beispielsweise das Schließen einer Kommunikationsverbindung, in einem Verfahrensschritt A ein USSD-String *106# an das Mobilfunknetz gesendet. Der USSD-String *106# entspricht dabei dem Befehl S1, nämlich der Abfrage des Kontostandes 23 des Guthabenkontos des Nutzers. Daraufhin ist vorgesehen, dass in einem Verfahrensschritt B1 das Mobilfunknetz eine entsprechende Antwort R1A an das Endgerät sendet, wodurch der aktuelle Kontostand 23 des Guthabenkontos numerisch und/oder in graphisch ausgestalteter Form 27 seitens der Anzeigeeinrichtung 24 des mobilen Endgerätes dargestellt wird. In Anzeige 44 "1" wird der Kontostand 23 (Balance) vorliegend numerisch wiedergegeben und beträgt vorliegend 8,27 EUR. Insbesondere zum sogenannten Aufladen des Guthabenkontos werden zusätzlich zu dem wiedergegebenen Kontostand 23 auswählbare Menüoptionen angeboten. Vorliegend sind in Anzeige 44 "1" zwei Menüoptionen auswählbar, nämlich Option 1 "Top Up" und Option 2 "Callnow Transfer". Durch Wahl der Option 1 wird in einem Verfahrensschritt C das Top-Up-Menü gemäß Anzeige 44 "1.1" aufgerufen. Hier hat der Nutzer wieder die Wahl zwischen zwei Menüoptionen Option 1 "Own Number" und Option 2 "Other mobile nr". Hier kann der Nutzer entscheiden, ob er durch Wahl von Option 1 im Top-Up-Menü das Guthabenkonto, welches der Rufnummer des Endgerätes, das er gerade nutzt, zugewiesen ist, aufladen möchte, oder ein Guthabenkonto, welches einer anderen Mobilfunknummer zugewiesen ist (Option 2 im Top-Up-Menü).

Wählt der Nutzer die Option 1, so wird in einem Verfahrensschritt D1 das Untermenü "OWN NUMBER" geöffnet, wie in Anzeige 44 "1.1.1" dargestellt. Hier kann der Nutzer wählen, auf welche Weise das Guthabenkonto aufgeladen werden soll. In diesem Ausführungsbeispiel stehen die Option 1 "Voucher" zum Aufladen durch Eingabe eines Codes 45 von einem erworbenen Guthabenbeleg (Voucher) und die Option 2 "Bank account" zum Aufladen des Guthabenkontos durch Abbuchen eines Geldbetrages von einer Bankkonto beziehungsweise der Bankverbindung, die der Nutzer bei seinem Mobilfunknetzbetreiber hinterlegt hat, zur Auswahl.

Wählt der Nutzer die Option 1 "Voucher", so wird in einem Verfahrensschritt E1 ein weiteres Untermenü "VOUCHER" angezeigt, welches ein Eingabefeld 46 zur Eingabe des Codes 45 von dem Guthabenbeleg aufweist. In Anzeige 44 "1.1.1.1." ist zur Erläuterung beispielhaft "1234567890" als Code 45 in das Feld 46 eingetragen. Dieser Code 45 wird in einem Verfahrensschritt F gemäß Befehl S2 als USSD-String 41 an das Mobilfunknetz gesendet.

Das Mobilfunknetz sendet daraufhin in einem Verfahrensschritt G1 eine Antwort R2A, die im Ausführungsbeispiel eine Textmitteilung umfasst, in der mitgeteilt wird, dass das erworbene Guthaben dem Guthabenkonto gutgeschrieben wurde. In einem Verfahrensschritt H wechselt die Anzeige zu einer Wiedergabedarstellung des Guthabenkontos, wie beispielsweise in Fig. 5a dargestellt. Wenn das Mobilfunknetz keine Antwort R2A zurückliefert, so wird in einem Verfahrensschritt I in der Menüstruktur zurück in das Untermenü "OWN NUMBER" gewechselt, sodass der Nutzer eine erneute Eingabe tätigen kann. Zum Schutz gegen Missbrauch sind die Anzahl der möglichen Eingabe pro Zeiteinheit allerdings limitiert. So kann der Nutzer im Ausführungsbeispiel nur zwei weitere Versuche pro Stunde starten.

Fig. 8.2 zeigt weitere Verfahrensschritte, für den Fall, dass der Nutzer sich im Untermenü "OWN NUMBER" für die Option 2 "Bank account" entscheidet. In einem Verfahrensschritt E2 wird dann ein USSD-String 41 (Befehl S3) an das Mobilfunknetz gesendet, woraufhin geprüft wird, ob der Nutzer (cust) dem elektronischen Lastschriftverfahren (ELV) zugestimmt hat. Ist dies der Fall, wird in einem Verfahrensschritt J1 eine Antwort R3A seitens des Mobilfunknetzes an das Endgerät geschickt, wodurch das Untermenü "OWN NUMBER VIA BANK" mit den Auswahloptionen Option 1 "Top up via bank" und Option 2 "Change PIN", wie in Anzeige 44 "1.1.1.2" dargestellt, geöffnet wird. Wird die Antwort R3A nicht gesendet, so wird in einem Verfahrensschritt J2 zurück in das Untermenü "OWN NUMBER" gemäß Anzeige 44 "1.1.1" gewechselt.

Wählt der Nutzer nach Durchführung des Verfahrensschritts J1 die Option 1 "Top up via bank" so wird in einem Verfahrensschritt K1 das Untermenü "TOPUP VIA BANK ACCOUNT", wie in Anzeige 44 "1.1.1.2.1" dargestellt, geöffnet, in dem der Nutzer zur Eingabe seiner PIN in ein Eingabefeld 46 aufgefordert wird. Wurde die PIN korrekt eingegeben, so öffnet sich in einem Verfahrensschritt L1 das weitere Untermenü "PIN OK", in welchem der Nutzer den Geldbetrag, mit welchem er das Guthabenkonto aufladen möchte, auswählen kann.

Wählt der Nutzer beispielsweise einen vorgegebenen Betrag von 15,00 EUR, so wird in einem Verfahrensschritt M1 ein USSD-String entsprechend dem Befehl S5.1 an das Mobilfunknetz gesendet. Das Mobilfunknetz sendet daraufhin in einem Verfahrensschritt N1 eine Antwort R5A an das Endgerät, in der mitgeteilt wird, dass das Guthaben dem Guthabenkonto gutgeschrieben wird. Das gewählte Guthaben wird dem Guthabenkonto seitens des Mobilfunknetzes zeitnah gutgeschrieben.

Ist ein Fehler aufgetreten, beispielsweise aufgrund einer Falscheingabe durch den Nutzer oder aus technischen Gründen, sodass die Antwort R5A nicht gesendet wird, so wird in einem Verfahrensschritt N2 zurück in das Untermenü "OWN NUMBER VIA BANK" (Anzeige 44 "1.1.1.2") gewechselt.

In Fig. 8.3 beziehungsweise Fig. 8.4 ist analog zu Fig. 8.2 eine Auswahl eines Geldbetrages von 25,00 EUR beziehungsweise 50,00 EUR durch den Nutzer, sowie die darauf folgenden Verfahrensschritte M2, N3 und N4 beziehungsweise M3, N5 und N6 beispielhaft dargestellt.

In Fig. 8.5 ist in einem Ausführungsbeispiel dargestellt, wie ein Nutzer ausgehend von dem Untermenü "OWN NUMBER VIA BANK" seine PIN 47 ändern kann.

Fig. 8.6 zeigt, beispielhaft die Untermenüs der USSD-Menü-Anwendung 7, wenn der Nutzer ausgehend von dem Menü "TOP UP" (Anzeige 44 "1,1") für eine andere Mobilfunknummer ein Guthabenkonto aufladen möchte. Der Nutzer wählt dann in dem Menü "TOP UP" die Option 2 "Other mobile nr". In einem Verfahrensschritt D2 öffnet sich daraufhin ein Untermenü "TOP UP OTHER NR WITH VOUCHER" mit einem Eingabefeld 46 wie in Anzeige 44 "1.1.2" dargestellt. In das Eingabefeld 46 gibt der Nutzer die Mobilfunknummer 48 desjenigen Guthabenkontos ein, das er aufladen möchte. Die sich anschließenden Verfahrensschritte erfolgen im Wesentlichen analog wie zu Fig. 8.1 beschrieben.

Antwortet das Mobilfunknetz auf die Anfrage im Verfahrensschritt A nicht, beispielsweise weil das Endgerät nicht im Mobilfunknetz eingebucht ist, so wird in einem Verfahrensschritt B2 das Top-UP-Menü ausgeblendet und stattdessen zu einer Anzeige gemäß Fig. 8.7 (back to idle) seitens der Anzeigeeinrichtung 24 des Endgerätes gewechselt.

In Fig. 8.7 ist zudem dargestellt, dass der Nutzer in Anzeige 44 "1" auch die Option 2 "Callnow Transfer" aufrufen kann. Bei Aufruf wird in einem Verfahrensschritt C2 ein USSD-String 41 (Befehl S7) an das Mobilfunknetz gesendet. Das Senden des Befehls 42 bewirkt, dass das geöffnete Menü geschlossen und ein USSD-Browser 11 gestartet wird.

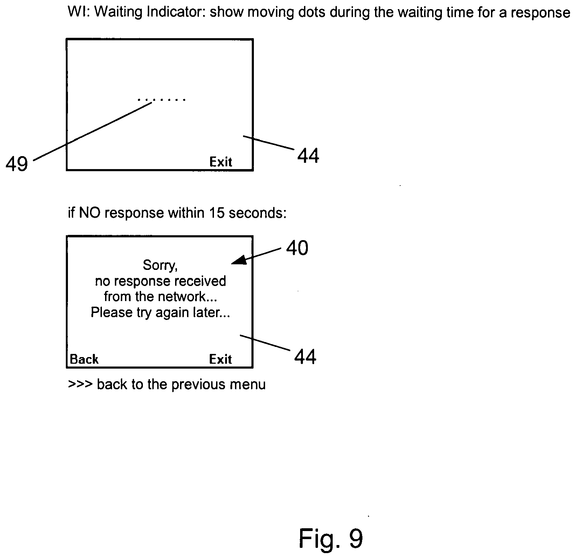

In Fig. 9 zeigt ein Ausführungsbeispiel für eine Anzeige zur Einblendung auf der Anzeigeeinrichtung des Endgerätes während eine Anfrage an das Mobilfunknetz gerichtet wird, insbesondere während einer Anfrage mittels USSD-String 41 wie insbesondere zu Fig. 8.1 bis Fig. 8.3 beschrieben und in Fig. 8.1 bis Fig. 8.6 durch (+ WI) kenntlich gemacht. Wenn das Mobilfunksystem die Anfrage nicht in Echtzeit beantworten kann, der Nutzer aber darüber informiert sein soll, dass die Anfrage an das Mobilfunknetz gerichtet wird, insbesondere damit er nicht in der Annahme der USSD-String beziehungsweise die Anfrage sei nicht gesendet worden mehrfach eine Anfrage an das Mobilfunknetz richtet, werden, während die Anfrage läuft, sich durch bzw. über die Anzeigeeinrichtung laufende bzw. bewegende Punkte 49 dargestellt. Erfolgt eine Antwort des Mobilfunknetzes auf die Anfrage nicht innerhalb einer vorgebbaren Zeit, beispielsweise innerhalb von 15 Sekunden, so wird eine Texteinblendung 40 angezeigt, dass keine Antwort vom Mobilfunknetz empfangen wurde und der Nutzer aufgefordert, die Anfrage später zu wiederholen. Die Anzeige 44 wechselt nach Einblendung 40 dieser Mitteilung vorliegend vorteilhafterweise automatisch in das Menü, von dem aus die Anfrage gestartet wurde.

In einer weiteren Ausführungsvariante ist vorgesehen, dass die gesendeten Antworten des Mobilfunknetzes stets mit einer vordefinierten Zeichenkette beginnen, die seitens des Endgerätes beziehungsweise der auf dem Endgerät ausgeführten Anwendung ausgelesen und interpretiert werden, wodurch vorteilhafterweise automatisch Reaktionen, wie zu Fig. 8.1 bis Fig. 8.7 beschrieben, ausgelöst werden.

Die in den Figuren der Zeichnung dargestellten und im Zusammenhang mit diesen beschriebenen Ausführungsbeispiele der Erfindung dienen lediglich der Erläuterung der Erfindung und sind für diese nicht beschränkend.

### Bezugszeichenliste:

- 1: Eingabemittel ("Blauer Knopf") Endgerät
- 2: Hard-Key (Eingabemittel (1))
- 3: Soft-Key (Eingabemittel (1))
- 4: Menüeintrag (Eingabemittel (1))
- 5: Aktivierung Eingabemittel (1)
- 6: Anwendung/Applikation
- 7: USSD-Menü (Anwendung (6))
- 8: SIM-STK (Anwendung (6))
- 9: mCare (Anwendung (6))
- 10: Java/OpenOS (Anwendung (6))
- 11: Browser (Anwendung (6))
- 12: Abfrage/Darstellung (Ausführung Anwendung (6))
- 13: Übertragungsmittel/Übertragungstechnik
- 14: USSD (Übertragungsmittel/Übertragungstechnik (13))
- 15: SMS (Übertragungsmittel/Übertragungstechnik (13))
- 16: Daten/Datenverbindung (Übertragungsmittel/Übertragungstechnik (13))
- 17: Übertragung
- 18: Recheneinrichtung Kundeninformations- und Abrechnungssystem (KIAS) oder Intelligentes Netz (IN)
- 19: Verarbeitung
- 20: Endgerät/Mobilfunktelefon
- 21: real betätigbare Taste (Endgerät (20))
- 22: auswählbarer Menüpunkt (Endgerät (20)
- 23: Kontostand (des wenigstens einen Guthabenkontos und/oder des wenigstens einen Kundenkontos mit nachträglicher Rechnungslegung)
- 24: Anzeigeeinrichtung (des Endgerätes)
- 25: Statuszeile
- 26: Abfragezeitpunkt
- 27: graphisch ausgestaltete Wiedergabeform / graphische Darstellung#
- 28: Zeigerdarstellung
- 29: Halbkreisförmiger Bereich
- 30: Kreisbogen
- 31: Betragsintervall
- 32: Menü
- 33: Uhrzeit
- 34: Datum
- 35: Menüauswahl
- 36: Untermenü
- 37: Untermenü
- 38: Untermenü
- 39: Maximalwert
- 40: Texteinblendung
- 41: USSD-String
- 42: Befehl
- 43: Antwort
- 44: Anzeige
- 45: Code
- 46: Eingabefeld
- 47: PIN
- 48: Mobilfunknummer
- 49: bewegende/laufenden Punkte
- A: Verfahrensschritt
- B1: Verfahrensschritt
- B2: Verfahrensschritt
- C1: Verfahrensschritt
- C2: Verfahrensschritt
- D1: Verfahrensschritt
- D2: Verfahrensschritt
- E1: Verfahrensschritt
- E2: Verfahrensschritt
- F: Verfahrensschritt
- G1: Verfahrensschritt
- H: Verfahrensschritt
- I: Verfahrensschritt
- J1: Verfahrensschritt
- J2: Verfahrensschritt
- K1: Verfahrensschritt
- L1: Verfahrensschritt
- M1: Verfahrensschritt
- M2: Verfahrensschritt
- M3: Verfahrensschritt
- N1: Verfahrensschritt
- N2: Verfahrensschritt
- N3: Verfahrensschritt
- N4: Verfahrensschritt
- N5: Verfahrensschritt
- N6: Verfahrensschritt

## Patentansprüche

1. Verfahren zum Betreiben eines
in einem Kommunikationsdienste bereitstellenden Mobilfunknetz, insbesondere einem Mobilfunknetz gemäß einem GSM-, GPRS-, UMTS- und/oder LTE-Funknetzstandard,
mit wenigstens einem Guthabenkonto, Prepaid, mit wenigstens einem Kontostand (23) oder wenigstens einem Kundenkonto mit nachträglicher Rechnungslegung, Postpaid, mit wenigstens einem Kontostand (23) nutzbaren Endgerätes (20),
welches eine Anzeigeeinrichtung zur optischen, akustischen und/oder sensuellen Wiedergabe von Informationen und wenigstens eine Eingabeeinrichtung zur optischen, akustischen und/oder sensuellen Erfassung von Informationen aufweist,
wobei
während der Nutzung eines kostenpflichtigen Kommunikationsdienstes des Mobilfunknetzes mit dem Endgerät (20)
nach Ablauf vordefinierter und/oder vorgebbarer Zeitspannen der wenigstens eine Kontostand (23) des wenigstens einen Guthabenkontos oder des wenigstens einen Kundenkontos mit nachträglicher Rechnungslegung mittels einer vom Endgerät (20) an eine das Guthabenkonto verwaltenden und/oder unterhaltenden Einrichtung (18) gerichteten Kontostandsabfrage der Kontostand des Guthabenkontos abgefragt wird,
der abgefragte Kontostand als Kontostandinformation über das Mobilfunknetz an das Endgerät (20) gesendet wird,
und
seitens der Anzeigeeinrichtung des Endgerätes (20) wiedergegeben wird.

2. Verfahren nach Anspruch 1, **dadurch gekennzeichnet, dass** der wenigstens eine Kontostand des wenigstens einen Guthabenkontos oder des wenigstens einen Kundenkontos mit nachträglicher Rechnungslegung zudem nach Beendigung des mit dem Endgerät (20) in Anspruch genommenen Kommunikationsdienstes des Mobilfunknetzes seitens der Anzeigeeinrichtung des Endgerätes (20) wiedergegeben wird.

3. Verfahren nach Anspruch 1 oder Anspruch 2, **gekennzeichnet durch** Sprach- und/oder Datendienste als in Anspruch genommene kostenpflichtige Kommunikationsdienste des Mobilfunknetzes, vorzugsweise durch Telefonate, SMS, MMS und/oder Datenverbindungen als in Anspruch genommene kostenpflichtige Kommunikationsdienste des Mobilfunknetzes.

4. Verfahren nach Anspruch 1,
**dadurch gekennzeichnet, dass**
die Eingabeeinrichtung des Endgerätes (20) wenigstens ein Eingabemittel (1, 2, 3, 4, 21, 22) aufweist,
welches
dazu eingerichtet ist, bei Betätigung
den wenigstens einen Kontostand (23) des wenigstens einen Guthabenkontos oder des wenigstens einen Kundenkontos mit nachträglicher Rechnungslegung
seitens der Anzeigeeinrichtung des Endgerätes (20) wiederzugeben.

5. Verfahren nach Anspruch 4, **dadurch gekennzeichnet, dass** das Eingabemittel ausschließlich dazu eingerichtet ist, bei Betätigung den wenigstens einen Kontostand des wenigstens einen Guthabenkontos oder des wenigstens einen Kundenkontos mit nachträglicher Rechnungslegung seitens der Anzeigeeinrichtung des Endgerätes (20) wiederzugeben.

6. Verfahren nach Anspruch 1, **dadurch gekennzeichnet, dass** vorgenommene Änderungen seitens der Anzeigeeinrichtung des Endgerätes (20) wiedergegeben werden und vorzugsweise durch nochmalige Betätigung des wenigstens einen Eingabemittels (1, 2, 3, 4, 21, 22) der Eingabeeinrichtung des Endgerätes (20) bestätigt werden.

7. Verfahren nach einem der Ansprüche 3 bis 6, **dadurch gekennzeichnet, dass** das wenigstens eine Eingabemittel (1, 2, 3, 4, 21, 22) der wenigstens einen Eingabeeinrichtung als betätigbare Taste (2), vorzugsweise als real betätigbare Taste (1, 21), oder als auswählbarer Menüpunkt (2, 22) in einer Menüführung des Endgerätes (20) zur Steuerung von Funktionalitäten und/oder seitens des Endgerätes (20) ausführbarer Anwendungen ausgebildet ist.

8. Verfahren nach einem der Ansprüche 1 bis 7,
**dadurch gekennzeichnet, dass**
der wenigstens eine Kontostand (23) des wenigstens einen Guthabenkontos oder des wenigstens einen Kundenkontos mit nachträglicher Rechnungslegung
seitens der Anzeigeeinrichtung des Endgerätes (20) in graphisch ausgestalteter Form (27) wiedergegeben wird.

9. Verfahren nach Anspruch 8, **dadurch gekennzeichnet, dass** die graphisch ausgestaltete Wiedergabe (27) des Kontostandes (23) des wenigstens einen Guthabenkontos oder des wenigstens einen Kundenkontos mit nachträglicher Rechnungslegung als graphische Darstellung (27) in Abhängigkeit von der Höhe des Kontostandes (23) des wenigstens einen Guthabenkontos oder des wenigstens einen Kundenkontos mit nachträglicher Rechnungslegung erfolgt, wobei zumindest vordefinierten und/oder vorgebbaren Betragsintervallen (31) jeweils wenigstens eine vordefinierte und/oder vorgebbare, für einen Nutzer des Endgerätes (20) optisch unterscheidbare graphisch ausgestaltete Wiedergabeform (27) zugewiesen ist, sodass durch Übergang des Kontostandes (23) des wenigstens einen Guthabenkontos oder des wenigstens einen Kundenkontos mit nachträglicher Rechnungslegung von einem definierten Betragsintervall (31) in ein anderes Betragsintervall (31) die graphische Darstellung (27) verändert wird.

10. Verfahren nach einem der Ansprüche 1 bis 9, **dadurch gekennzeichnet, dass** der wenigstens eine Kontostand (23) des wenigstens einen Guthabenkontos oder des wenigstens einen Kundenkontos mit nachträglicher Rechnungslegung permanent oder temporär seitens der Anzeigeeinrichtung des Endgerätes (20) wiedergegeben wird.

11. Verfahren nach einem der Ansprüche 1 bis 10, **dadurch gekennzeichnet, dass** der wenigstens eine Kontostand (23) des wenigstens einen Guthabenkontos oder des wenigstens einen Kundenkontos mit nachträglicher Rechnungslegung automatisch mittels einer auf bzw. mit dem Endgerät (20) ausgeführten Anwendung (6, 7, 8, 9, 10, 11) über das Mobilfunknetz von wenigstens einer das wenigstens eine Guthabenkonto oder das wenigstens eine Kundenkonto mit nachträglicher Rechnungslegung verwaltenden und/oder unterhaltenden Einrichtung (18) abgefragt wird und der abgefragte Kontostand (23) des wenigstens einen Guthabenkontos oder des wenigstens einen Kundenkontos mit nachträglicher Rechnungslegung seitens der Anzeigeeinrichtung des Endgerätes (20) wiedergegeben wird.

12. Verfahren nach Anspruch 11, **dadurch gekennzeichnet, dass** die Anwendung (6) eine USSD-Menü-Anwendung (7), eine SIM-STK-Anwendung (8), eine mCare-Anwendung (9), eine Java/OpenOS-Anwendung (10) oder eine Browser-Anwendung (11) ist.

13. Verfahren nach Anspruch 11 oder Anspruch 12, **dadurch gekennzeichnet, dass** die über das Mobilfunknetz erfolgende Kontostandsabfrage mittels USSD, mittels SMS oder mittels einer Datenverbindung erfolgt.

14. Verfahren nach einem der Ansprüche 11 bis 13, **dadurch gekennzeichnet, dass** das Endgerät (20) im Rahmen einer Kontostandsabfrage einen USSD-String *100# an die das wenigstens eine Guthabenkonto oder das wenigstens eine Kundenkonto mit nachträglicher Rechnungslegung verwaltende und/oder unterhaltende Einrichtung (18) sendet.

15. Verfahren nach einem der Ansprüche 1 bis 14, **dadurch gekennzeichnet, dass** ein Auslöser für eine Kontostandsabfrage des wenigstens einen Kontostandes (23) des wenigstens einen Guthabenkontos oder des wenigstens einen Kundenkontos mit nachträglicher Rechnungslegung über das Mobilfunknetz und/oder für eine weitere Wiedergabe des wenigstens einen Kontostandes (23) des wenigstens einen Guthabenkontos oder des wenigstens einen Kundenkontos mit nachträglicher Rechnungslegung seitens der Anzeigeeinrichtung (24) des Endgerätes das Einschalten des Endgerätes (20) ist.

16. Verfahren nach einem der Ansprüche 1 bis 15, **dadurch gekennzeichnet, dass** ein Auslöser für eine über das Mobilfunknetz erfolgende Kontostandsabfrage des wenigstens einen Kontostandes (23) des wenigstens einen Guthabenkontos oder des wenigstens einen Kundenkontos mit nachträglicher Rechnungslegung über das Mobilfunknetz und/oder für eine weitere Wiedergabe des wenigstens einen Kontostandes (23) des wenigstens einen Guthabenkontos oder des wenigstens einen Kundenkontos mit nachträglicher Rechnungslegung seitens der Anzeigeeinrichtung (24) des Endgerätes (20) das Anmelden des Endgerätes (20) in einem Mobilfunknetz ist.

17. Verfahren nach einem der Ansprüche 2 bis 16, **dadurch gekennzeichnet, dass** der Auslöser für die Wiedergabe des wenigstens einen Kontostandes (23) des wenigstens einen Guthabenkontos oder des wenigstens einen Kundenkontos mit nachträglicher Rechnungslegung seitens der Anzeigeeinrichtung des Endgerätes das Schließen einer Signalisierungsverbindung zur Abfrage des wenigstens einen Kontostandes (23) des wenigstens einen Guthabenkontos oder des wenigstens einen Kundenkontos ist.

18. Verfahren nach einem der Ansprüche 1 bis 17, **dadurch gekennzeichnet, dass** mit oder nach der Wiedergabe des wenigstens einen Kontostandes des wenigstens einen Guthabenkontos oder des wenigstens einen Kundenkontos mit nachträglicher Rechnungslegung seitens der Anzeigeeinrichtung des Endgerätes (20) ein Aufladen des wenigstens einen Guthabenkontos oder ein Transfer von Guthaben von einem Guthabenkonto oder von einem Kundenkontos mit nachträglicher Rechnungslegung zu einem anderen Guthabenkonto oder einem anderen Kundenkonto mit nachträglicher Rechnungslegung oder von einem Guthabenkonto zu einem Kundenkonto mit nachträglicher Rechnungslegung ermöglicht wird, vorzugsweise in einem Dialog unter Nutzung einer graphischen Menüführung seitens des Endgerätes (20) und/oder durch Betätigung wenigstens eines, vorzugsweise ausschließlich dazu eingerichteten Eingabemittels (1, 2, 3, 4, 21, 22) der Eingabeeinrichtung des Endgerätes (20).

19. Verfahren nach einem der Ansprüche 1 bis 18, **dadurch gekennzeichnet, dass** mit oder nach der Wiedergabe des wenigstens einen Kontostandes des wenigstens einen Kundenkontos mit nachträglicher Rechnungslegung seitens der Anzeigeeinrichtung des Endgerätes (20) eine Wiedergabe des aktuellen Rechnungsstandes und/oder wenigstens eines der vorherigen Rechnungsstände bzw. der aktuellen Rechnung und/oder wenigstens einer der vorherigen Rechnungen ermöglicht wird, vorzugsweise in einem Dialog unter Nutzung einer graphischen Menüführung seitens des Endgerätes (20).

20. Verfahren nach einem der Ansprüche 11 bis 19, **dadurch gekennzeichnet, dass** die wenigstens eine das wenigstens eine Guthabenkonto oder das wenigstens eine Kundenkonto verwaltende und/oder unterhaltende Einrichtung (18) eine Einrichtung (18) des Mobilfunknetzes ist, vorzugsweise eine Einrichtung (18) eines Kundeninformations- und Abrechnungssystems, KIAS, des Mobilfunknetzes.

21. Endgerät (20) zum Betrieb in einem Kommunikationsdienste bereitstellenden Mobilfunknetz, insbesondere einem Mobilfunknetz gemäß einem GSM-, GPRS-, UMTS- und/oder LTE-Funknetzstandard, mit wenigstens einem Guthabenkonto, Prepaid, mit wenigstens einem Kontostand (23) oder wenigstens einem Kundenkonto mit nachträglicher Rechnungslegung, Postpaid, mit wenigstens einem Kontostand (23), welches wenigstens eine Anzeigeeinrichtung zur optischen, akustischen und/oder sensuellen Wiedergabe von Informationen und wenigstens eine Eingabeeinrichtung zur optischen, akustischen und/oder sensuellen Erfassung von Informationen aufweist, **dadurch gekennzeichnet, dass** dieses ausgebildet und/oder eingerichtet ist, ein Verfahren nach einem der Ansprüche 1, 2 und 4 bis 19 auszuführen.

22. Einrichtung (18), vorzugsweise Recheneinrichtung (18), in einem Kommunikationsdienste bereitstellenden Mobilfunknetz, insbesondere einem Mobilfunknetz gemäß einem GSM-, GPRS-, UMTS- und/oder LTE-Funknetzstandard, zur Verwaltung und/oder Unterhaltung von wenigstens einem Guthabenkonto oder wenigstens einem Kundenkonto mit nachträglicher Rechnungslegung zur Abrechnung von mittels eines in dem Mobilfunknetz nutzbaren Endgerätes (20) in Anspruch nehmbaren kostenpflichtigen Kommunikationsdiensten des Mobilfunknetzes, **dadurch gekennzeichnet, dass** diese ausgebildet und/oder eingerichtet ist, ein Verfahren nach einem der Ansprüche 1, 11 bis 14, 18 und 20 auszuführen.

## Claims

1. A method for operating a terminal (20) that can be used in a mobile radio network providing communication services, in particular a mobile radio network according to a GSM, GPRS, UMTS and/or LTE radio network standard, and used with at least one credit account, prepaid, with at least one account balance (23) or at least one customer account with subsequent invoicing, postpaid, with at least one account balance (23),
which terminal (20) comprises a display device for the optical, acoustic and/or sensual reproduction of information and at least one input device for the optical, acoustic and/or sensual gathering of information,
wherein
during the use of a fee-based communication service of the mobile radio network by means of the terminal (20)
and after pre-defined and/or pre-determinable periods of time have elapsed, the at least one account balance (23) of the at least one credit account or the at least one customer account with subsequent invoicing will be checked by means of an account balance query directed by the terminal (20) to a device (18) which manages and/or keeps the credit account,
the checked account balance will be sent as account balance information via the mobile radio network to the terminal (20),
and
will be reproduced by means of the display device of the terminal (20).

2. A method according to claim 1, **characterized in that** the at least one account balance of the at least one credit account or the at least one customer account with subsequent invoicing will be furthermore reproduced by means of the display device of the terminal (20) after completion of the communication service of the mobile radio network which has been used by the terminal (20).

3. A method according to claim 1 or claim 2, **characterized by** voice and/or data services as used fee-based communication services of the mobile radio network, preferably telephone calls, SMS, MMS and/or data connections as used fee-based communication services of the mobile radio network.

4. A method according to claim 1,
**characterized in that**
the input device of the terminal (20) comprises at least one input means (1, 2, 3, 4, 21, 22),
which,
when operated, is adapted to
reproduce the at least one account balance of the at least one credit account or the at least one customer account with subsequent invoicing by means of the display device of the terminal (20).

5. A method according to claim 4, **characterized in that** the input means, when operated, is exclusively adapted to reproduce the at least one account balance of the at least one credit account or the at least one customer account with subsequent invoicing by means of the display device of the terminal (20).

6. A method according to claim 1, **characterized in that** realized modifications will be reproduced by the display device of the terminal (20) and will be confirmed by preferably repeatedly actuating the at least one input means (1, 2, 3, 4, 21, 22) of the input device of the terminal (20).

7. A method according to one of the claims 3 to 6, **characterized in that** the at least one input means (1, 2, 3, 4, 21, 22) of the at least one input device is configured as a key (2) to be pressed, preferably as a key to be really pressed (1, 21) or as a selectable menu item (2, 22) in a menu navigation of the terminal (20) for controlling functionalities and/or applications to be carried out by the terminal (20).

8. A method according to one of the claims 1 to 7,
**characterized in that**
the at least one account balance (23) of the at least one credit account or the at least one customer account with subsequent invoicing
will be reproduced in a graphic form (27) by means of the display device of the terminal (20).

9. A method according to claim 8, **characterized in that** the graphic reproduction (27) of the account balance (23) of the at least one credit account or the at least one customer account with subsequent invoicing will be realized as a graphic representation (27) in dependence on the amount of the account balance (23) of the at least one credit account or the at least one customer account with subsequent invoicing, wherein at least one predefined and/or pre-determinable graphic reproduction form (27) that can be optically distinguished by a user of a terminal (20) is respectively allocated to at least predefined and/or pre-determinable amount intervals (31), such that if the account balance (23) of the at least one credit account or the at least one customer account with subsequent invoicing passes from one defined amount interval (31) into another amount interval (31), the graphic representation (27) will be modified.

10. A method according to one of the claims 1 to 9, **characterized in that** the at least one account balance (23) of the at least one credit account or the at least one customer account with subsequent invoicing will be permanently or temporally reproduced by means of the display device of the terminal (20).

11. A method according to one of the claims 1 to 10, **characterized in that** the at least one account balance (23) of the at least one credit account or the at least one customer account with subsequent invoicing will be checked automatically by means of an application (6, 7, 8, 9, 10, 11) carried out on or by means of the terminal (20) via the mobile radio network by at least one device (18) which manages and/or keeps the at least one credit account or the at least one customer account with subsequent invoicing and the checked account balance (23) of the at least one credit account or the at least one customer account with subsequent invoicing will be reproduced by means of the display device of the terminal (20).

12. A method according to claim 11, **characterized in that** the application (6) is a USSD menu application (7), a SIM-STK application (8), a MCare application (9), a Java/OpenOS application (10) or a browser application (11).

13. A method according to claim 11 or claim 12, **characterized in that** the account balance check realized via the mobile radio network will be carried out by means of USSD, by means of SMS or by means of a data connection.

14. A method according to one of the claims 11 to 13, **characterized in that** within the scope of an account balance check the terminal (20) will send a USSD string *100# to the device (18) which manages and/or keeps the at least one credit account or the at least one customer account with subsequent invoicing.

15. A method according to one of the claims 1 to 14, **characterized in that** a trigger of an account balance check of the at least one account balance (23) of the at least one credit account or the at least one customer account with subsequent invoicing via the mobile radio network and/or a trigger of another reproduction of the at least one account balance (23) of the at least one credit account or the at least one customer account with subsequent invoicing by means of the display device (24) of the terminal is the switching on of the terminal (20).

16. A method according to one of the claims 1 to 15, **characterized in that** a trigger of an account balance check of the at least one account balance (23) of the at least one credit account or the at least one customer account with subsequent invoicing via the mobile radio network and/or a trigger of another reproduction of the at least one account balance (23) of the at least one credit account or the at least one customer account with subsequent invoicing by means of the display device (24) of the terminal (20) is the registering of the terminal (20) in a mobile radio network.

17. A method according to one of the claims 2 to 16, **characterized in that** a trigger of the reproduction of the at least one account balance (23) of the at least one credit account or the at least one customer account with subsequent invoicing by means of the display device of the terminal is the closing of a signalling connection for checking the at least one account balance (23) of the at least one credit account or the at least one customer account.

18. A method according to one of the claims 1 to 17, **characterized in that** with or after the reproduction of the at least one account balance of the at least one credit account or the at least one customer account with subsequent invoicing by means of the display device of the terminal (20) a recharging of the at least one credit account or a transfer of credit from a credit account or from a customer account with subsequent invoicing onto another credit account or another customer account with subsequent invoicing or from a credit account onto a customer account with subsequent invoicing will be enabled, preferably in a dialogue using a graphic menu navigation by the terminal (20) and/or by actuating at least one input means (1, 2, 3, 4, 21, 22) of the input device of the terminal (20), which input means (1, 2, 3, 4, 21, 22) is preferably exclusively arranged for this purpose.

19. A method according to one of the claims 1 to 18, **characterized in that** with or after the reproduction of the at least one account balance of the at least one customer account with subsequent invoicing by means of the display device of the terminal (20) a reproduction of the current status of the invoice and/or at least one of the previous statuses of the invoice or the current invoice and/or at least one of the previous invoices will be enabled, preferably in a dialogue using a graphic menu navigation by means of the terminal (20).

20. A method according to one of the claims 1 to 19, **characterized in that** the at least one device (18) which manages and/or keeps the at least one credit account or the at least one customer account is a device (18) of the mobile radio network, preferably a device (18) of a customer information and billing system, KIAS, of the mobile radio network.

21. A terminal (20) to be operated in a mobile radio network providing communication services, in particular a mobile radio network according to a GSM, GPRS, UMTS and/or LTE radio network standard, and used with at least one credit account, prepaid, with at least one account balance (23) or at least one customer account with subsequent invoicing, postpaid, with at least one account balance (23),
which terminal (20) comprises at least one display device for the optical, acoustic and/or sensual reproduction of information and at least one input device for the optical, acoustic and/or sensual gathering of information, **characterized in that** said terminal (20) is configured for and/or adapted to carry out a method according to one of the claims 1, 2 and 4 to 19.

22. A device (18), preferably a computing device (18) in a mobile radio network providing communication services, in particular a mobile radio network according to a GSM, GPRS, UMTS and/or LTE radio network standard, for managing and/or keeping at least one credit account or at least one customer account with subsequent invoicing for billing fee-based communication services of the mobile radio network, which services can be used by means of a terminal (20) usable in the mobile radio network, **characterized in that** said device is configured for and/or adapted to carry out a method according to one of the claims 1, 11 to 14, 18 and 20.

## Revendications

1. Procédé de fonctionnement d'un terminal (20),
qui peut être utilisé dans un réseau radio mobile fournissant des services de communication,
notamment un réseau radio mobile selon un standard de réseau radio GSM, GPRS, UMTS et/ou LTE,
avec au moins un compte de crédit, prépayé, ayant au moins un solde de compte (23) ou avec au moins un compte de client avec une facturation ultérieure, post-payé, ayant au moins un solde de compte (23),
lequel terminal (20) comprend un dispositif d'affichage destiné à la reproduction optique, acoustique et/ou sensuelle des informations et au moins un dispositif d'entrée destiné à la saisie optique, acoustique et/ou sensuelle des informations,
dans lequel
pendant l'utilisation d'un service de communication payant du réseau radio mobile par le terminal (20)
et après l'écoulement des périodes de temps prédéfinies et/ou pré-déterminables
l'au moins un solde de compte (23) de l'au moins un compte de crédit ou de l'au moins un compte de client avec une facturation ultérieure est demandé par moyen d'une demande de solde de compte dirigée par le terminal (20) à un dispositif (18), qui gère et/ou maintient le compte de crédit,
le solde de compte demandé sera envoyé comme information de solde de compte via le réseau radio mobile au terminal (20)
et
sera reproduit par le dispositif d'affichage du terminal (20).

2. Procédé selon la revendication 1, **caractérisé en ce que** l'au moins un solde de compte de l'au moins un compte de crédit ou de l'au moins un compte de client avec une facturation ultérieure est en outre reproduit par le dispositif d'affichage du terminal (20) après que le service de communication du réseau radio mobile utilisé par le terminal (20) soit terminé.

3. Procédé selon la revendication 1 ou la revendication 2, **caractérisé par** des services linguistiques et/ou des services de données comme des services de communication payants du réseau radio mobile, de préférence des appels, des SMS, des MMS et/ou des liaisons de données comme des services de communication payants du réseau radio mobile.

4. Procédé selon la revendication 1,
**caractérisé en ce que**
le dispositif d'entrée du terminal (20) comprend au moins un moyen d'entrée (1,2,3,4,21,22),
qui
est adapté, s'il est actionné, à
reproduire l'au moins un solde de compte (23) de l'au moins un compte de crédit ou de l'au moins un compte de client avec une facturation ultérieure par moyen du dispositif d'affichage du terminal (20).

5. Procédé selon la revendication 4, **caractérisé en ce que** le moyen d'entrée, s'il est actionné, est exclusivement adapté à reproduire l'au moins un solde de compte (23) de l'au moins un compte de crédit ou de l'au moins un compte de client avec une facturation ultérieure par moyen du dispositif d'affichage du terminal (20).

6. Procédé selon la revendication 1, **caractérisé en ce que** des modifications effectuées sont reproduites par le dispositif d'affichage du terminal (20) et sont confirmées de préférence par un nouvel actionnement de l'au moins un moyen d'entrée (1, 2, 3, 4, 21, 22) du dispositif d'entrée du terminal (20).

7. Procédé selon l'une des revendications 3 à 6, **caractérisé en ce que** l'au moins un moyen d'entrée (1, 2, 3, 4, 21, 22) de l'au moins un dispositif d'entrée est configuré comme une touche (2) susceptible d'être pressée, de préférence comme une touche (1, 21) susceptible d'être pressée réellement, ou comme un élément de menu (2, 22) sélectionnable dans une navigation de menu du terminal (20) pour commander des fonctionnalités et/ou des applications, qui peuvent être exécutées par le terminal (20).

8. Procédé selon l'une des revendications 1 à 7,
**caractérisé en ce que**
l'au moins un solde de compte (23) de l'au moins un compte de crédit ou de l'au moins un compte de client avec une facturation ultérieure sera reproduit sous une forme graphique (27) par moyen du dispositif d'affichage du terminal (20).

9. Procédé selon la revendication 8, **caractérisé en ce que** la reproduction graphique (27) du solde de compte (23) de l'au moins un compte de crédit ou de l'au moins un compte de client avec une facturation ultérieure est réalisée comme une représentation graphique (27) en fonction du montant du solde de compte (23) de l'au moins un compte de crédit ou de l'au moins un compte de client avec une facturation ultérieure, dans lequel au moins une forme de reproduction graphique (27) prédéfinie et/ou pré-déterminable, qui peut être distinguée de manière optique par un utilisateur du terminal (20), est attribué à chacun d'intervalles de montant au moins prédéfinis et/ou pré-déterminables (31), de sorte que si le solde de compte (23) de l'au moins un compte de crédit ou de l'au moins un compte de client avec une facturation ultérieure passe d'un intervalle de montant défini (31) à un autre intervalle de montant (31), la représentation graphique (27) sera modifiée.

10. Procédé selon l'une des revendications 1 à 9, **caractérisé en ce que** l'au moins un solde de compte (23) de l'au moins un compte de crédit ou de l'au moins un compte de client avec une facturation ultérieure est reproduit de manière permanente ou temporaire par moyen du dispositif d'affichage du terminal (20).

11. Procédé selon l'une des revendications 1 à 10, **caractérisé en ce que** l'au moins un solde de compte (23) de l'au moins un compte de crédit ou de l'au moins un compte de client avec une facturation ultérieure est demandé de manière automatique par moyen d'une application (6, 7, 8, 9, 10, 11) exécutée sur ou par le terminal (20) via le réseau radio mobile par au moins un dispositif (18), qui gère et/ou maintient l'au moins un compte de crédit ou l'au moins un compte de client avec une facturation ultérieure et le solde de compte demandé (23) de l'au moins un compte de crédit ou de l'au moins un compte de client avec une facturation ultérieure est reproduit par le dispositif d'affichage du terminal (20).

12. Procédé selon la revendication 11, **caractérisé en ce que** l'application (6) est une application de menu USSD (7), une application SIM-STK (8), une application MCare (9), une application Java/OpenOS (10) ou une application de navigation (11).

13. Procédé selon la revendication 11 ou la revendication 12, **caractérisé en ce que** la demande de solde de compte réalisée via le réseau radio mobile est effectuée par moyen de USSD, par moyen de SMS ou par moyen d'une liaison de données.

14. Procédé selon l'une des revendications 11 à 13, **caractérisé en ce que** dans le cadre d'une demande de solde de compte le terminal (20) envoie un string USSD *100# au dispositif (18), qui gère et/ou maintient l'au moins un compte de crédit ou l'au moins un compte de client avec une facturation ultérieure.

15. Procédé selon l'une des revendications 1 à 14, **caractérisé en ce qu'**un déclenchement d'une demande de solde de compte de l'au moins un solde de compte (23) de l'au moins un compte de crédit ou de l'au moins un compte de client avec une facturation ultérieure via le réseau radio mobile et/ou un déclenchement d'une autre reproduction de l'au moins un solde de compte (23) de l'au moins un compte de crédit ou de l'au moins un compte de client avec une facturation ultérieure par moyen du dispositif d'affichage (24) du terminal est l'allumage du terminal (20).

16. Procédé selon l'une des revendications 1 à 15, **caractérisé en ce qu'**un déclenchement d'une demande de solde de compte de l'au moins un solde de compte (23) de l'au moins un compte de crédit ou de l'au moins un compte de client avec une facturation ultérieure via le réseau radio mobile et/ou un déclenchement d'une autre reproduction de l'au moins un solde de compte (23) de l'au moins un compte de crédit ou de l'au moins un compte de client avec une facturation ultérieure par moyen du dispositif d'affichage (24) du terminal est l'enregistrement du terminal (20) dans un réseau radio mobile.

17. Procédé selon l'une des revendications 2 à 16, **caractérisé en ce que** le déclenchement de la reproduction de l'au moins un solde de compte (23) de l'au moins un compte de crédit ou de l'au moins un compte de client avec une facturation ultérieure par moyen du dispositif d'affichage du terminal est la fermeture d'une liaison de signalisation pour demander l'au moins un solde de compte (23) de l'au moins un compte de crédit ou de l'au moins un compte de client.

18. Procédé selon l'une des revendications 1 à 17, **caractérisé en ce qu'**avec ou après la reproduction de l'au moins un solde de compte de l'au moins un compte de crédit ou de l'au moins un compte de client avec une facturation ultérieure par moyen du dispositif d'affichage du terminal (20), un rechargement de l'au moins un compte de crédit ou un transfert de crédit d'un compte de crédit ou d'un compte de client avec une facturation ultérieure à un autre compte de crédit ou à un autre compte de client avec une facturation ultérieure ou d'un compte de crédit à un compte de client avec une facturation ultérieure est rendu possible, de préférence dans un dialogue en utilisant une navigation de menu graphique par le terminal (20) et/ou par l'actionnement d'au moins un moyen d'entrée (1, 2, 3, 4, 21, 22) du dispositif d'entrée du terminal (20), lequel moyen d'entrée (1, 2, 3, 4, 21, 22) est de préférence exclusivement configurée à cet effet.

19. Procédé selon l'une des revendications 1 à 18, **caractérisé en ce qu'**avec ou après la reproduction de l'au moins un solde de compte de l'au moins un compte de client avec une facturation ultérieure par moyen du dispositif d'affichage du terminal (20), une reproduction de l'état actuel de la facture et/ou d'au moins un des états précédents de la facture ou de la facture actuelle et/ou d'au moins une des factures précédentes est rendue possible, de préférence dans un dialogue en utilisant une navigation de menu graphique par le terminal (20).

20. Procédé selon l'une des revendications 11 à 19, **caractérisé en ce que** l'au moins un dispositif (18), qui gère et/ou maintient l'au moins un compte de crédit ou l'au moins un compte de client est un dispositif (18) du réseau radio mobile, de préférence un dispositif (18) d'un système d'information de client et de facturation, KIAS, du réseau radio mobile.

21. Terminal (20) destiné au fonctionnement dans un réseau radio mobile fournissant des services de communication, notamment un réseau radio mobile selon un standard de réseau radio GSM, GPRS, UMTS et/ou LTE, avec au moins un compte de crédit, prépayé, ayant au moins un solde de compte (23) ou avec au moins un compte de client avec une facturation ultérieure, post-payé, ayant au moins un solde de compte (23),
lequel terminal (20) comprend un dispositif d'affichage destiné à la reproduction optique, acoustique et/ou sensuelle des informations et au moins un dispositif d'entrée destiné à la saisie optique, acoustique et/ou sensuelle des informations, **caractérisé en ce que** le terminal (20) est configuré pour et/ou adapté à exécuter un procédé selon l'une des revendications 1, 2 et 4 à 19.

22. Dispositif (18), de préférence un ordinateur (18) dans un réseau radio mobile fournissant des services de communication, notamment un réseau radio mobile selon un standard de réseau radio GSM, GPRS, UMTS et/ou LTE, pour gérer et/ou maintenir au moins un compte de crédit ou au moins un compte de client avec une facturation ultérieure, pour facturer des services de communication payants du réseau radio mobile, lesquels services peuvent être utilisés par moyen d'un terminal (20) utilisable dans le réseau radio mobile, **caractérisé en ce que** ledit dispositif est configuré pour et/ou adapté à exécuter un procédé selon l'une des revendications 1, 11 à 14,18 et 20.
